# EUROPEAN PATENT APPLICATION

(11) **EP 1 841 221 A2**
(43) Date of publication of application: **03.10.2007**
(21) Application number: 07005974.6
(22) Date of filing: 22.03.2007
(51) Int. Cl.: H04N 5/655

(54) **Automatic wall mounting system for wall-mounted tv**

(30) Priority: 27.03.2006 KR 20060027246; 28.03.2006 KR 20060027877; 29.03.2006 KR 20060028476; 31.03.2006 KR 20060029493; 31.03.2006 KR 20060029494; 08.11.2006 KR 20060110015
(71) Applicant: Keyang Electric Machinery Co., Ltd., Jung-gu Seoul 100-080 (KR)
(72) Inventor: Chun, Hyung Hwan, Suwon-si, Gyeonggi-do 443-780 (KR); Cho, Ju Yeon, Yongin-si Gyeonggi-do 448-130 (KR); Lee, Hyoung Ho, Becheon-si Gyeonggi-do 420-709 (KR); Kwon, Nam Jin, Gunpo-si Gyeonggi-do 435-731 (KR)
(74) Representative: Schumacher & Willsau

(57) **Abstract**

Provided is an automatic wall mounting system for a wall-mounted television (TV). The system has a support plate 110, a left/right tilting part 120, and a TV mount plate 130. The TV mount plate 130 tilting left/right about the support plate 110. The left/right tilting part 120 includes a left/right tilting motor 121 having driving shafts 121a and 121b, gear parts 122 and 123 geared and ungeared by the same length in an opposite direction, and having connection links 122a and 123a at their front ends, a first rotary shaft 124 having a connector 124a at its predetermined portion, and a second rotary shaft 125 having a connector 125a at its predetermined portion.

## Description

### BACKGROUND OF THE INVENTION

### Field of the Invention

The present invention relates to an automatic wall mounting system for a wall-mounted television, and more particularly, to an automatic wall mounting system for a wall-mounted television (TV), for automatically swiveling left/right a screen of the TV depending on a viewer position in a remote place, thereby providing an optimal screen position to a viewer in real time while promptly, simply, and conveniently swiveling left/right the screen by automation, and simplifying a structure for left/right swiveling the TV, thereby improving work efficiency and promoting cost saving in manufacture process.

### Description of the Related Art

In compliance with the general trend of large-size and slimness of a display apparatus, a wall-mounted television (TV) such as Liquid Crystal Display (LCD) and Plasma Display Panel (PDP) TVs is trending toward wall mount for viewing.

However, the conventional wall-mounted TV is of a general type in which it is directly fixed to a wall surface by a bolt, or it is installed in front of a fixing metal bracket installed on a wall surface. The wall-mounted TV has a drawback that it is impossible to control the screen position of the once fixed TV, and has troublesomeness that a viewer should directly control the screen position of the TV in a manual manner, though controlling the screen position.

The wall-mounted TV is of a general type in which it is built in and fixed to a wall surface by a coupling means such as a bolt, or it is mounted in front of a swiveling bracket installed on a wall surface such that that a viewer can left/right control a screen position of the TV in a manual manner.

Among the related-art TV installation methods, however, a built-in installation method has a drawback that it is impossible to swivel left/right a screen of the TV depending on viewer position. A bracket based installation method causes troublesomeness that the viewer should directly control the screen position of the TV, swiveling left/right, in the manual manner, though he/she can control the screen position.

### SUMMARY OF THE INVENTION

An aspect of exemplary embodiments of the present invention is to address at least the problems and/or disadvantages and to provide at least the advantages described below. Accordingly, an aspect of exemplary embodiments of the present invention is to provide to an automatic wall mounting system for wall-mounted television (TV), for automatically swiveling left/right a screen of the TV depending on a viewer position in a remote place, thereby providing an optimal screen position to a viewer in real time while promptly, simply, and conveniently swiveling left/right the screen by automation, and simplifying a structure for left/right swiveling the TV, thereby improving work efficiency and promoting cost saving in manufacture process.

According to one aspect of exemplary embodiments of exemplary embodiments of the present invention, there is provided an automatic wall mounting system for a wall-mounted television (TV). The system has a support plate installed at a wall surface and supporting a left/right swiveling operation of the TV; a left/right swiveling part installed at the support plate and swiveling the TV left/right; and a TV mount plate mounting the TV in its front and coupling with the left/right swiveling part in its rear. The left/right swiveling part includes a left/right swiveling motor fixed and installed at the support plate, and having driving shafts at upper and lower ends, respectively; gear parts connecting with both the driving shafts of the left/right swiveling motor, and geared and ungeared by the same length in an opposite direction using rotation of the driving shafts, and having connection links at their front ends; a first rotary shaft integrally coupled with the connection link of the gear part, and rotatably installed at one side of the support plate, and having a pair of connectors at its predetermined portions, the connectors connecting with upper and lower ends of the TV mount plate; and a second rotary shaft integrally coupled with the connection link of the gear part, and rotatably installed at the other side of the support plate that is opposite to the first rotary shaft, and having a pair of connectors at its predetermined portions, the connectors connecting with upper and lower ends of the TV mount plate.

The gear parts may include rod screws engaged with the driving shafts, and rotating, remaining in place, in vertical directions of the driving shafts; and screw housings screwed with the rod screws, and moving left/right depending on rotation of the rod screws while axially rotating the first and second rotary shafts using the connection links.

The driving shafts and the rod screws may be engaged with each other in a worm gear type.

The system may further include gear boxes for boxing the driving shafts and the rod screws, and the support plate may have gear box support rods for supporting the gear boxes.

In another aspect of exemplary embodiments of the present invention, there is provided an automatic wall mounting system for a wall-mounted television (TV). The system has a support plate installed at a wall surface and supporting a left/right swiveling operation of the TV; a left/right swiveling part installed at the support plate and swiveling the TV left/right; and a TV mount plate mounting the TV in its front and coupling with the left/right swiveling part in its rear. The TV mount plate is hinged and coupled at its rear and upper end with a hinge connector of the support plate such that it can tilt left/right about the support plate, and at the same time, is coupled at its rear and lower end to the left/right swiveling part. The left/right swiveling part includes a left/right swiveling motor fixed and installed at the support plate, and having driving shafts at upper and lower ends, respectively; gear parts connecting with both the driving shafts of the left/right swiveling motor, and geared and ungeared by the same length in an opposite direction using rotation of the driving shafts, and having connection links at their front ends; a first rotary shaft integrally coupled with the connection link of the gear part, and rotatably installed at one lower side of the support plate, and having a connector at its predetermined portion, the connector connecting with a lower end of the TV mount plate; and a second rotary shaft integrally coupled with the connection link of the gear part, and rotatably installed at the other side of the support plate that is opposite to the first rotary shaft, and having a connector at its predetermined portion, the connector connecting with a lower end of the TV mount plate.

The gear parts may include rod screws engaged with the driving shafts, and rotating, remaining in place, in vertical directions of the driving shafts; and screw housings screwed with the rod screws, and moving left/right depending on rotation of the rod screws while axially rotating the first and second rotary shafts using the connection links.

The driving shafts and the rod screws may be engaged with each other in a worm gear type.

The system may further include gear boxes for boxing the driving shafts and the rod screws, and the support plate may have gear box support rods for supporting the gear boxes.

A motor support bracket for covering and supporting the left/right swiveling motor may be provided at a central and lower part of the support plate.

The motor support bracket may have a support pin latch at its center, and the TV mount plate may have a rotary support pin at its rear and lower central part corresponding to the support pin latch such that the rotary support pin is stably mounted on the support pin latch and stably tilts left/right the TV mount plate when the left/right swiveling part is activated.

Connection parts of the TV mount plate associated with the hinge connector of the support plate and the respective connectors of the left/right tiling part may be ball joints for facilitating left/right swiveling.

The TV mount plate may have a hinge connection part connecting with the hinge connector of the support plate, and the hinge connection part may further include a guide socket sliding left/right as covering the ball joints.

In a further another aspect of exemplary embodiments of the present invention, there is provided an automatic wall mounting system for a wall-mounted television (TV). The system has a support plate installed at a wall surface and supporting a left/right swiveling operation of the TV; a left/right swiveling part installed at the support plate and swiveling the TV left/right; and a TV mount plate mounting the TV in its front and coupling with the left/right swiveling part in its rear. The TV mount plate is hinged and coupled at its rear and upper end with a hinge connector of the support plate such that it can tilt left/right about the support plate, and at the same time, is coupled at its rear and lower end to the left/right swiveling part. The left/right swiveling part includes a pair of left/right swiveling motors fixed and installed at the support plate, and having driving shafts, respectively; gear parts connecting with the respective driving shafts of the left/right swiveling motors, and geared and ungeared by the same length in an opposite direction using rotation of the driving shafts, and having connection links at their front ends; a first rotary shaft integrally coupled with the connection link of the gear part, and rotatably installed at one lower side of the support plate, and having a connector at its predetermined portion, the connector connecting with a lower end of the TV mount plate; and a second rotary shaft integrally coupled with the connection link of the gear part, and rotatably installed at the other side of the support plate that is opposite to the first rotary shaft, and having a connector at its predetermined portion, the connector connecting with a lower end of the TV mount plate.

The gear parts may include rod screws engaged with the respective driving shafts, and axially rotating in vertical directions of the driving shafts; and screw housings screwed with the rod screws, and moving left/right depending on rotation of the rod screws while axially rotating the first and second rotary shafts using the connection links.

The driving shafts and the rod screws may be engaged with each other in a worm gear type.

The system may further include gear boxes for boxing the driving shafts and the rod screws. The support plate may have gear box support rods for supporting the gear boxes.

A motor support bracket for covering and supporting the left/right swiveling motors may be provided at a central and lower part of the support plate.

The motor support bracket may have a support pin latch at its center. The TV mount plate may have a rotary support pin at its rear and lower central part corresponding to the support pin latch such that the rotary support pin is stably mounted on the support pin latch and stably tilts left/right the TV mount plate when the left/right swiveling part is activated.

Connection parts of the TV mount plate associated with the hinge connector of the support plate and the respective connectors of the left/right tiling part may be ball joints for facilitating left/right swiveling.

The TV mount plate may have a hinge connection part connecting with the hinge connector of the support plate. The hinge connection part may further include a guide socket sliding left/right as covering the ball joints.

In a still another aspect of exemplary embodiments of the present invention, there is provided an automatic wall mounting system for a wall-mounted television (TV). The system has a support plate installed at a wall surface and supporting a left/right swiveling operation of the TV; a left/right swiveling part installed at the support plate and swiveling the TV left/right; and a TV mount plate mounting the TV in its front and coupling with the left/right swiveling part in its rear. The left/right swiveling part includes left/right swiveling motors each fixed and installed at both upper and lower sides of the support plate, and each having driving shafts; gear parts connecting with the respective driving shafts of the left/right swiveling motors, and geared and ungeared by the same length using rotation of the driving shafts, respectively, and having connection links at their front ends; and rotary shafts integrally coupled with the connection links of the gear parts, and rotatably installed at shaft rotation supports of the support plate, and having connectors at their circumferences, the connectors connecting with corresponding portions of the TV mount plate.

The gear parts may include rod screws engaged with the respective driving shafts, and rotating, remaining in place, in vertical directions of the driving shafts; and screw housings screwed with the rod screws, and moving left/right depending on rotation of the rod screws while axially rotating the rotary shafts using the connection links.

The driving shafts and the rod screws may be engaged with each other in a worm gear type.

The system may further include gear boxes for boxing the driving shafts and the rod screws. The support plate may have gear box support rods for supporting the gear boxes.

In a yet another aspect of exemplary embodiments of the present invention, there is provided an automatic wall mounting system for a wall-mounted television (TV). The system has a support plate installed at a wall surface and supporting a left/right swiveling operation of the TV; a left/right swiveling part installed at the support plate and swiveling the TV left/right; and a TV mount plate mounting the TV in its front and coupling with the left/right swiveling part in its rear. The TV mount plate is hinged and fixed at its one end of a width direction, and the left/right swiveling part is installed at the other end of the width direction of the TV mount plate. The left/right swiveling part includes left/right swiveling motors fixed and installed in parallel at the support plate, and having driving shafts protruding from their upper and lower ends, respectively; gear parts connecting with the respective driving shafts of the left/right swiveling motors, and geared and ungeared by the same length using rotation of the driving shafts, respectively, and having connection links at their front ends; and rotary shafts integrally coupled with the connection links of the gear parts, and rotatably installed at one-side upper and lower ends of the support plate, and having connectors at predetermined portions, the connectors connecting with upper and lower ends of the TV mount plate.

The gear parts may include rod screws engaged with the respective driving shafts, and rotating, remaining in place, in vertical directions of the driving shafts; and screw housings screwed with the rod screws, and moving left/right depending on rotation of the rod screws while axially rotating the respective rotary shafts using the connection links.

The driving shafts and the rod screws may be engaged with each other in a worm gear type.

The system may further include gear boxes for boxing the driving shafts and the rod screws. The support plate may have gear box support rods for supporting the gear boxes.

In a yet another aspect of exemplary embodiments of the present invention, there is provided an automatic wall mounting system for a wall-mounted television (TV). The system has a support plate installed at a wall surface and supporting a left/right swiveling operation of the TV; a left/right swiveling part installed at the support plate and swiveling the TV left/right; and a TV mount plate mounting the TV in its front and coupling with the left/right swiveling part in its rear. The left/right swiveling part includes a left/right swiveling motor fixed and installed at the support plate, and having a driving shaft at one end; a gear part connecting with the driving shaft of the left/right swiveling motor, and geared and ungeared using rotation of the driving shaft, and having a connection link at its front end; a first rotary shaft integrally coupled with the connection link of the gear part, and rotatably installed at one side of the support plate, and having a connector at its one end, the connector connecting with the TV mount plate; a second rotary shaft having a shape in which it is symmetric with the first rotation shaft, and rotatably installed at the other side of the support plate that is opposite to the first rotary shaft; and an interworking link connecting and interworking the first and second rotary shafts with each other.

The gear part may include a rod screw engaged with the driving shaft, and rotating, remaining in place, in a vertical direction of the driving shaft; and a screw housing screwed with the rod screw, and moving left/right depending on rotation of the rod screw and rotating the connection link.

The driving shaft and the rod screw may be engaged with each other in a worm gear type.

The interworking link may include a connection bar having the same length as a distance spaced between the first and second rotations shafts; and connection fragments each vertically extending from both ends of the connection bar and hinged and connected at their one-ends with the connection bar, and each integrally coupled at the other ends with the first and second rotary shafts.

### BRIEF DESCRIPTION OF THE DRAWINGS

The accompanying drawings, which are included to aid in The above and other objects, features and advantages of the present invention will become more apparent from the following detailed description when taken in conjunction with the accompanying drawings in which:

FIG. 1 is a schematic perspective view illustrating a support plate of an automatic wall mounting system for a wall-mounted TV according to a first exemplary embodiment of the present invention;

FIG. 2 is a perspective view illustrating a left/right swiveling part that is a key part of an automatic wall mounting system for a wall-mounted television TV according to a first exemplary embodiment of the present invention;

FIG. 3 is a schematic front view illustrating a coupling state of a support plate and a left/right swiveling part in an automatic wall mounting system for a wall-mounted TV according to a first exemplary embodiment of the present invention;

FIG. 4 is a schematic plan view illustrating an automatic wall mounting system for a wall-mounted TV according to a first exemplary embodiment of the present invention;

FIG. 5 is a schematic plan view illustrating a state where TV tilts to the right in an automatic wall mounting system for a wall-mounted TV according to a first exemplary embodiment of the present invention;

FIG. 6 is a schematic plan view illustrating a state where TV tilts to the left in an automatic wall mounting system for a wall-mounted TV according to a first exemplary embodiment of the present invention;

FIG. 7 is a schematic perspective view illustrating a TV mount plate in an automatic wall mounting system for a wall-mounted TV according to a first exemplary embodiment of the present invention;

FIG. 8 is a schematic perspective view illustrating a support plate of an automatic wall mounting system for a wall-mounted TV according to a second exemplary embodiment of the present invention;

FIG. 9 is a perspective view illustrating a left/right swiveling part that is a key part of an automatic wall mounting system for a wall-mounted TV according to a second exemplary embodiment of the present invention;

FIG. 10 is a schematic plan view illustrating an automatic wall mounting system for a wall-mounted TV according to a second exemplary embodiment of the present invention;

FIG. 11 is a schematic plan view illustrating a state where TV tilts to the right in an automatic wall mounting system for a wall-mounted TV according to a second exemplary embodiment of the present invention;

FIG. 12 is a schematic plan view illustrating a state where TV tilts to the left in an automatic wall mounting system for a wall-mounted TV according to a second exemplary embodiment of the present invention;

FIG. 13 is a perspective view illustrating a TV mount plate in an automatic wall mounting system for a wall-mounted TV according to a second exemplary embodiment of the present invention;

FIG. 14 is a schematic front view illustrating a coupling state of a support plate and a left/right swiveling part in an automatic wall mounting system for a wall-mounted TV according to a second exemplary embodiment of the present invention;

FIG. 15 is a perspective view illustrating a key-part coupling state of a hinge connector of a support plate and a hinge connection part of a TV mount plate in an automatic wall mounting system for a wall-mounted TV according to a second exemplary embodiment of the present invention;

FIG. 16 is a perspective view illustrating a key-part coupling state of a connector of a left/right swiveling part and a hinge connection part of a TV mount plate in an automatic wall mounting system for a wall-mounted TV according to a second exemplary embodiment of the present invention;

FIG. 17 is a schematic perspective view illustrating a support plate of an automatic wall mounting system for a wall-mounted TV according to a third exemplary embodiment of the present invention;

FIG. 18 is a perspective view illustrating a left/right swiveling part that is a key part of an automatic wall mounting system for a wall-mounted TV according to a third exemplary embodiment of the present invention;

FIG. 19 is a schematic plan view illustrating an automatic wall mounting system for a wall-mounted TV according to a third exemplary embodiment of the present invention;

FIG. 20 is a schematic plan view illustrating a state where TV tilts to the right in an automatic wall mounting system for a wall-mounted TV according to a third exemplary embodiment of the present invention;

FIG. 21 is a schematic plan view illustrating a state where TV tilts to the left in an automatic wall mounting system for a wall-mounted TV according to a third exemplary embodiment of the present invention;

FIG. 22 is a perspective view illustrating a TV mount plate in an automatic wall mounting system for a wall-mounted TV according to a third exemplary embodiment of the present invention;

FIG. 23 is a schematic front view illustrating a coupling state of a support plate and a left/right swiveling part in an automatic wall mounting system for a wall-mounted TV according to a third exemplary embodiment of the present invention;

FIG. 24 is a perspective view illustrating a key-part coupling state of a hinge connector of a support plate and a hinge connection part of a TV mount plate in an automatic wall mounting system for a wall-mounted TV according to a third exemplary embodiment of the present invention;

FIG. 25 is a perspective view illustrating a key-part coupling state of a connector of a left/right swiveling part and a hinge connection part of a TV mount plate in an automatic wall mounting system for a wall-mounted TV according to a third exemplary embodiment of the present invention;

FIG. 26 is a schematic perspective view illustrating a support plate of an automatic wall mounting system for a wall-mounted TV according to a fourth exemplary embodiment of the present invention;

FIG. 27 is a perspective view illustrating a left/right swiveling part that is a key part of an automatic wall mounting system for a wall-mounted TV according to a fourth exemplary embodiment of the present invention;

FIG. 28 is a schematic front view illustrating a coupling state of a support plate and a left/right swiveling part in an automatic wall mounting system for a wall-mounted TV according to a fourth exemplary embodiment of the present invention;

FIG. 29 is a schematic plan view illustrating an automatic wall mounting system for a wall-mounted TV according to a fourth exemplary embodiment of the present invention;

FIG. 30 is a schematic plan view illustrating a state where TV tilts to the right in an automatic wall mounting system for a wall-mounted TV according to a fourth exemplary embodiment of the present invention;

FIG. 31 is a schematic plan view illustrating a state where TV tilts to the left in an automatic wall mounting system for a wall-mounted TV according to a fourth exemplary embodiment of the present invention;

FIG. 32 is a schematic perspective view illustrating a TV mount plate in an automatic wall mounting system for a wall-mounted TV according to a fourth exemplary embodiment of the present invention;

FIG. 33 is a schematic perspective view illustrating a support plate of an automatic wall mounting system for a wall-mounted TV according to a fifth exemplary embodiment of the present invention;

FIG. 34 is a perspective view illustrating a left/right swiveling part that is a key part of an automatic wall mounting system for a wall-mounted TV according to a fifth exemplary embodiment of the present invention;

FIG. 35 is a schematic front view illustrating a coupling state of a support plate and a left/right swiveling part in an automatic wall mounting system for a wall-mounted TV according to a fifth exemplary embodiment of the present invention;

FIG. 36 is a schematic plan view illustrating an automatic wall mounting system for a wall-mounted TV according to a fifth exemplary embodiment of the present invention;

FIG. 37 is a schematic plan view illustrating a state where TV tilts to the right in an automatic wall mounting system for a wall-mounted TV according to a fifth exemplary embodiment of the present invention;

FIG. 38 is a schematic plan view illustrating a state where TV tilts to the left in an automatic wall mounting system for a wall-mounted TV according to a fifth exemplary embodiment of the present invention;

FIG. 39 is a schematic perspective view illustrating a TV mount plate in an automatic wall mounting system for a wall-mounted TV according to a fifth exemplary embodiment of the present invention;

FIG. 40 is a schematic perspective view illustrating a support plate of an automatic wall mounting system for a wall-mounted TV according to a sixth exemplary embodiment of the present invention;

FIG. 41 is a perspective view illustrating a left/right swiveling part that is a key part of an automatic wall mounting system for a wall-mounted TV according to a sixth exemplary embodiment of the present invention;

FIG. 42 is a schematic plan view illustrating an automatic wall mounting system for a wall-mounted TV according to a sixth exemplary embodiment of the present invention;

FIG. 43 is a schematic plan view illustrating a state where TV tilts toward a right viewer in an automatic wall mounting system for a wall-mounted TV according to a sixth exemplary embodiment of the present invention;

FIG. 44 is a schematic plan view illustrating a state where TV tilts toward a left viewer in an automatic wall mounting system for a wall-mounted TV according to a sixth exemplary embodiment of the present invention;

FIG. 45 is a schematic perspective view illustrating a TV mount plate in an automatic wall mounting system for a wall-mounted TV according to a sixth exemplary embodiment of the present invention; and

FIG. 46 is a perspective view illustrating a coupling state of a connector of a left/right swiveling part and a hinge connection part of a TV mount plate in an automatic wall mounting system for a wall-mounted TV according to a sixth exemplary embodiment of the present invention.

Throughout the drawings, the same drawing reference numerals will be understood to refer to the same elements, features and structures.

### DETAILED DESCRIPTION OF THE INVENTION

Exemplary embodiments of the present invention will now be described in detail with reference to the annexed drawings. In the following description, a detailed description of known functions and configurations incorporated herein has been omitted for conciseness.

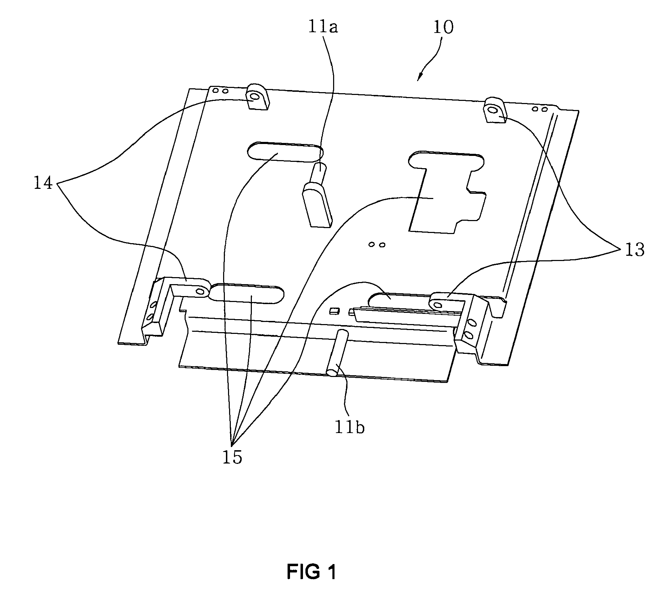

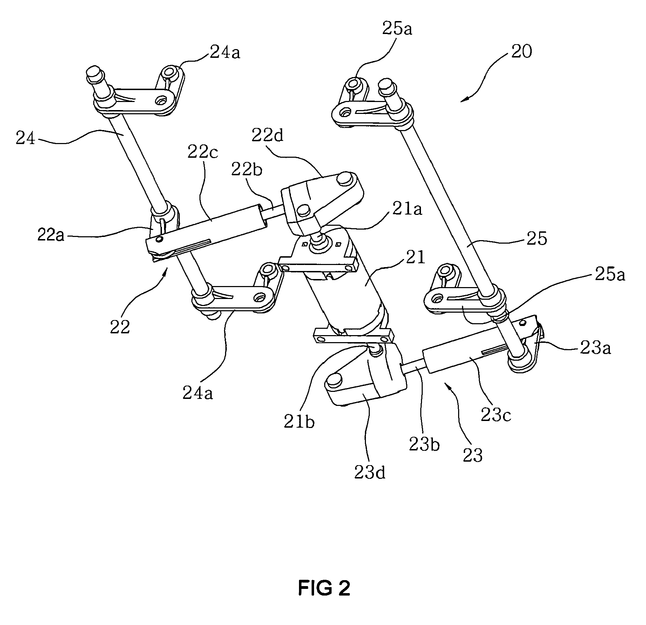

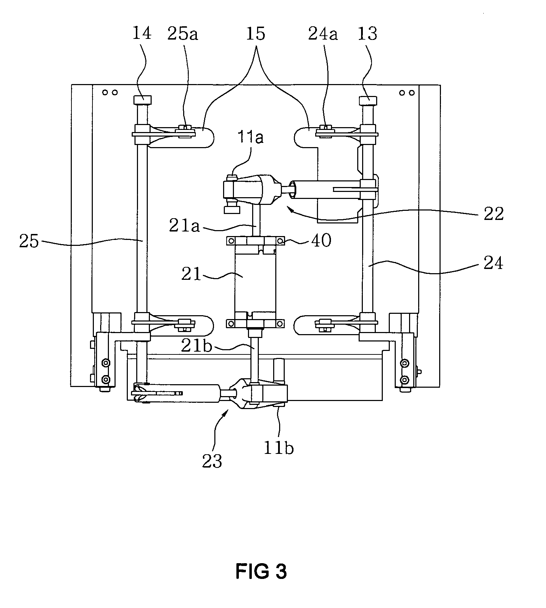

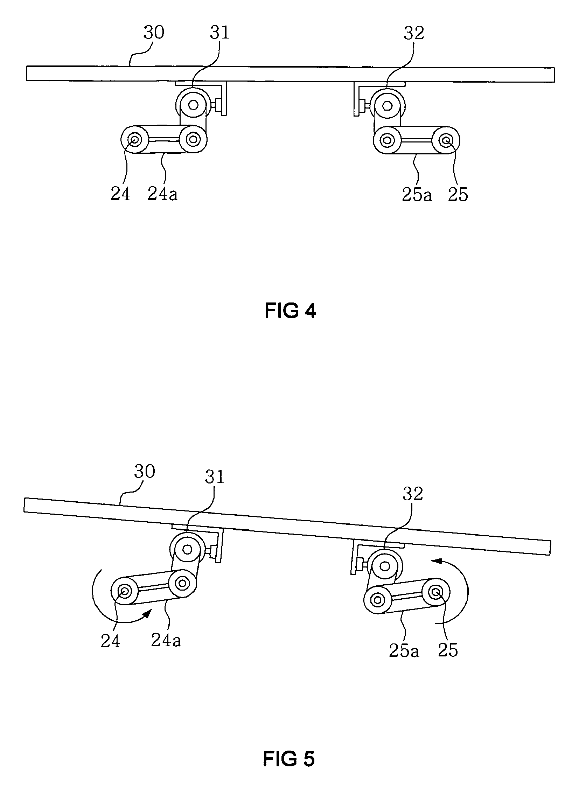

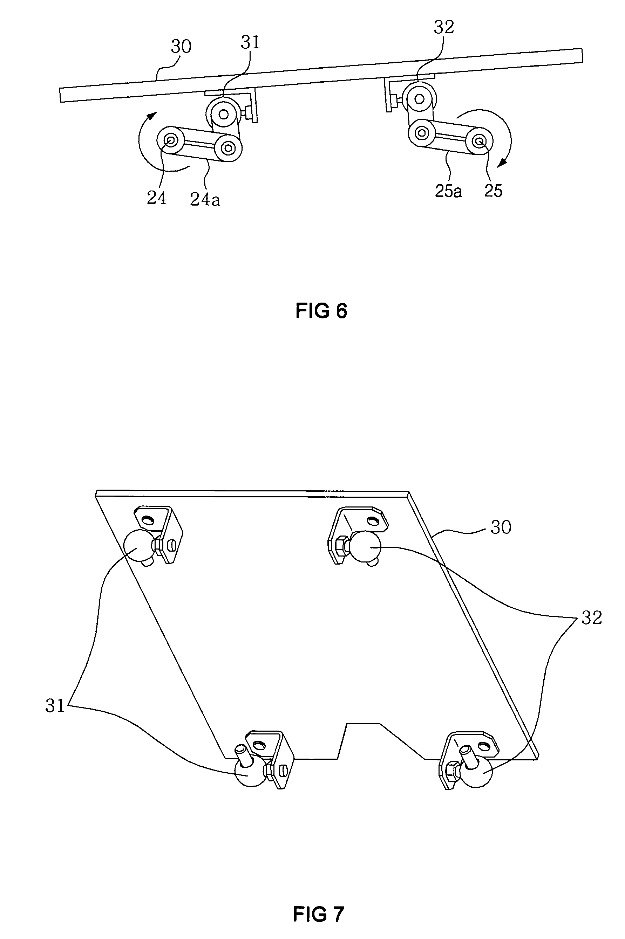

As shown in FIGS. 1 to 7, an automatic wall mounting system for a wall-mounted television (TV) according to a first exemplary embodiment of the present invention includes a support plate 10 installed at a wall surface and supporting a left/right swiveling operation of the TV; a left/right swiveling part 20 for swiveling left/right the TV installed at the support plate 10; and a TV mount plate 30 for mounting the TV (not shown) in its front and coupling with the left/right swiveling part 20 in its rear.

The support plate 10 is of a plate shape in which it is installed at a wall surface of a living room and the like and is coupled in its front with the left/right swiveling part 20. In detail, the support plate 10 has gear box support rods 11a and 11b at its center part and central and lower part to support respective gear boxes 22d and 23d in state where a left/right swiveling motor 21 is fixed and supported at a center part of the left/right swiveling part 20. The support plate 10 has shaft rotation supports 13 and 14 at its both sides, respectively. The shaft rotation supports 13 and 14 each insert and support upper and lower ends of first and second rotary shafts 24 and 25 such that the first and second rotary shafts 24 and 25 can axially rotate.

The support plate 10 can serve as an elevating plate such that the TV can elevate and descend in an up/down direction. The elevating plate is slidably coupled up/down to a fixing plate (not shown) fixed and installed at a wall surface.

Non-described reference numeral 15 denotes through-holes for enabling passage of rotating connectors 24a and 25a.

The left/right swiveling part 20 is coupled at one side to the support plate 10, and is coupled at the other side to the TV mount plate 30 to tilt the TV by a desired angle. The left/right swiveling part 20 includes the left/right swiveling motor 21, gear parts 22 and 23, and the first and second rotary shafts 24 and 25.

Each constituent element of the left/right swiveling part 20 will be in detail described below.

The left/right swiveling motor 21 is fixed and installed at a center of the support plate 10 by a separate coupling unit such as a bolt. The left/right swiveling motor 21 has driving shafts 21a and 21b at upper and lower ends, respectively. In particular, the left/right swiveling motor 21 enables forward/reversible rotation by a desired rotation angle, thereby forward/reversibly rotating rod screws 22b and 23b geared with the respective driving shafts 21a and 21b by a desired rotation angle in vertical directions of the driving shafts 21a and 21b.

The gear parts 22 and 23 each connect with the driving shafts 21a and 21b of the left/right tilting motor 21, and concurrently gear and ungear screw housings 22c and 23c by the same length using rotation of the driving shafts 21a and 21b. The gear parts 22 and 23 have connection links 22a and 23a at their front ends. In detail, the gear parts 22 and 23 include the rod screws 22b and 23b and the screw housings 22c and 23c. The rod screws 22b and 23b are engaged with the driving shafts 21a and 21b, and rotate, remaining in place, in vertical directions of the driving shafts 21a and 21b. The screw housings 22c and 23c are screwed with the rod screws 22b and 23b. The screw housings 22c and 23c spirally move left/right depending on the rotation of the rod screws 22b and 23b, and axially rotate first and second rotary shafts 24 and 25 using the connection links 22a and 23a.

The driving shafts 21a and 21b and the rod screws 22b and 23b are of a worm gear type that is a gear combination type in which they generate rotary forces in vertical directions to each other, thereby concurrently gearing and ungearing the screw housings 22c and 23c. In addition, various gear combination types would be possible as long as satisfying a condition of generating the rotary force in the vertical direction.

The first rotary shaft 24 is of a rod shape. The first rotary shaft 24 is integrally coupled with the connection link 22a of the gear part 22, and rotatably installed at the shaft rotation support 13 provided right from the center of the support plate 10. The first rotary shaft 24 has connectors 24a connecting with the TV mount plate 30 at its upper and lower ends, respectively.

The connector 24a is of a "┐"-shape in which it extends toward a center of the left/right swiveling part 20 and is again bent and extends toward the TV mount plate 30.

The second rotary shaft 25 is of a rod shape. The second rotary shaft 25 has connectors 25a connecting with the TV mount plate 30 at its upper and lower ends of the same height as the connectors 24a of the first rotary shaft 24, respectively. The second rotary shaft 25 is rotatably installed at the shaft rotation support 14 provided at the other side of the support plate 10 that is opposite to the first rotary shaft 24 from the center of the support plate 10.

The TV mount plate 30 is of a plate shape in which it mounts the TV in its front, and has connector connection parts 31 and 32 connecting with the respective connectors 24a and 25a of the left/right swiveling part 20 in its rear.

The automatic wall mounting system for a wall-mounted TV according to the first exemplary embodiment of the present invention is completed in assembly of its constituent parts for performing a TV left/right swiveling operation, by fixing and installing the left/right swiveling motor 21 of the left/right swiveling part 20 at the support plate 10 by a separate coupling unit 40, and rotatably coupling the first and second rotary shafts 24 and 25 of the left/right swiveling part 20 to the shaft rotation supports 13 and 14 provided at both sides of the support plate 10, respectively, and connecting the connectors 24a and 25a of the first and second rotary shafts 24 and 25 to the connector connection parts 31 and 32 of the TV mount plate 30, respectively.

An operation of the assembly-completed automatic wall mounting system for a wall-mounted TV when it is intended to tilt the TV in its screen position by a desired angle in any one direction of left/right, for example, when it is intended to tilt a screen toward a viewer positioned right from the TV will be described as follows. By activating the left/right swiveling motor 21 in a desired direction, the screw housings 22c and 23c move toward the left/right swiveling motor 21 through the rod screws 22b and 23b engaged with the respective driving shafts 21a and 21b. If so, as the screw housings 22c and 23c move, the first rotary shaft 24 axially rotates counterclockwise by a predetermined rotation angle by the connection links 22a and 23a provided at the front ends of the screw housings 22c and 23c. At the same time, the connectors 24a of the first rotary shaft 24 rotatively move in a direction of advancing to the front, thereby pushing the TV mount plate 30 to the front. In association with this, even the second rotary shaft 25 axially rotates in the same direction as that of the first rotary shaft 24 while the connectors 25a rotatively move in a direction of retreating to the rear, thereby pulling the TV mount plate 30 to the rear. As a result, the whole TV mount plate 30 tilts right, thereby swiveling the TV screen toward the right viewer.

An operation of the automatic wall mounting system for a wall-mounted TV when it is intended to tilt the screen toward a viewer positioned left from the TV will be described as follows. By activating the left/right swiveling motor 21 in a desired direction, the screw housings 22c and 23c move in a direction of getting distant away from the left/right swiveling motor 21 through the rod screws 22b and 23b engaged with the respective driving shafts 21a and 21b. If so, as the screw housings 22c and 23c move, the first rotary shaft 24 axially rotates clockwise by a predetermined rotation angle by the connection links 22a and 23a provided at the front ends of the screw housings 22c and 23c. At the same time, the connectors 24a of the first rotary shaft 24 rotatively move in a direction of retreating to the rear, thereby pulling the TV mount plate 30 to the rear. In association with this, even the second rotary shaft 25 axially rotates in the same direction as that of the first rotary shaft 24 while the connectors 25a rotatively move in a direction of advancing to the front, thereby pushing the TV mount plate 30 to the front. As a result, the whole TV mount plate 30 tilts left, thereby swiveling the TV screen toward the left viewer.

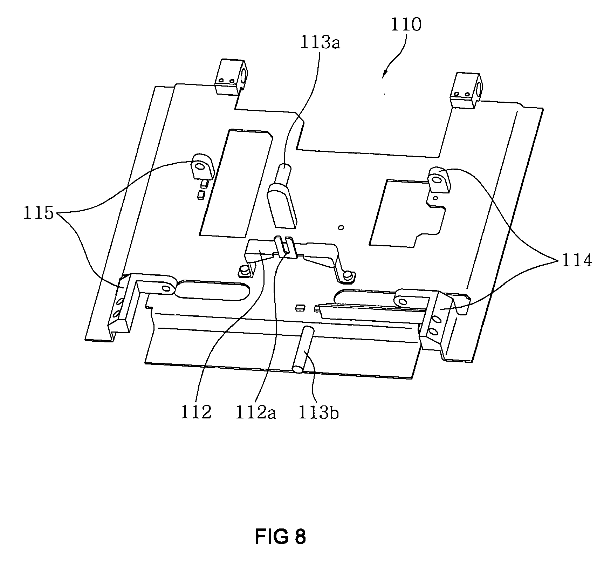

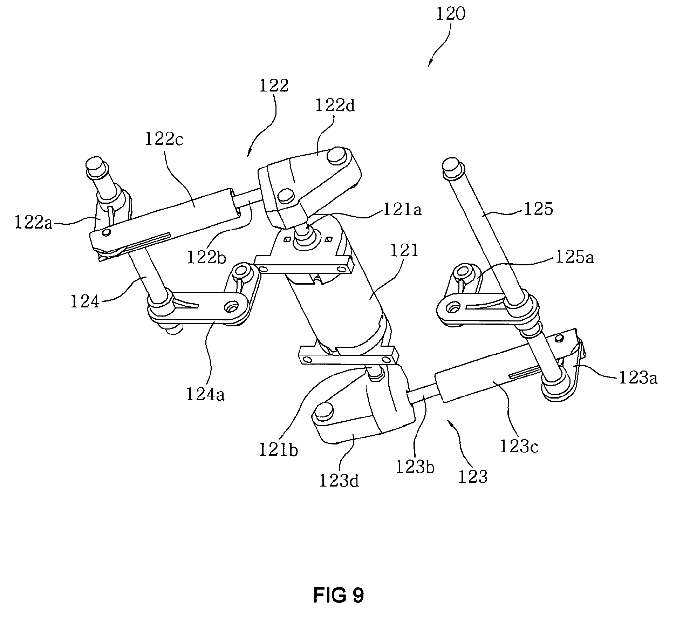

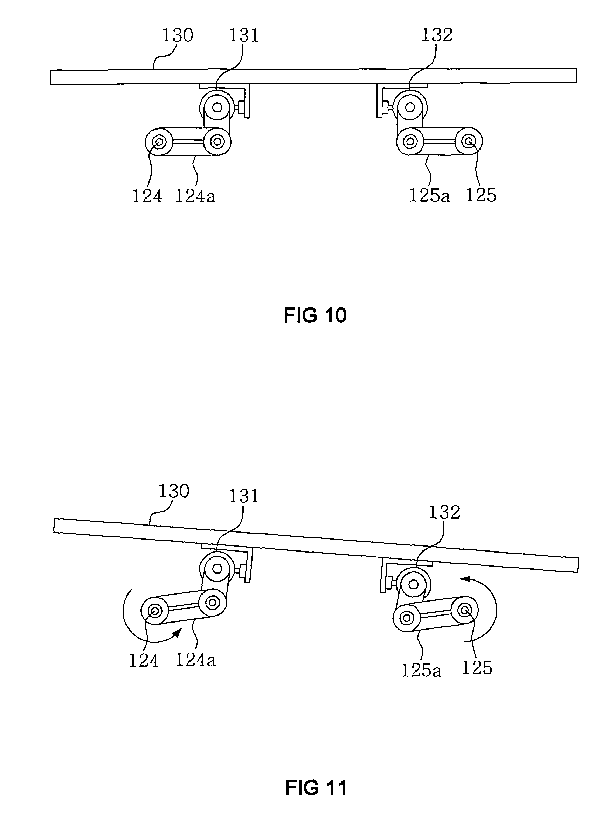

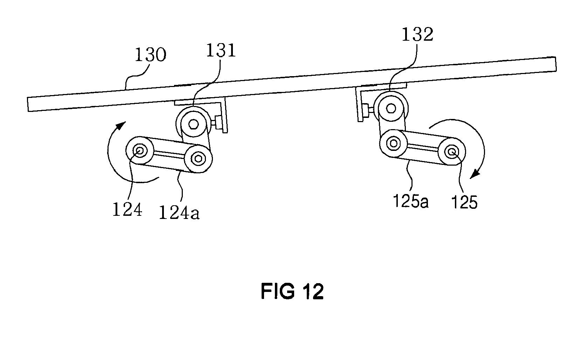

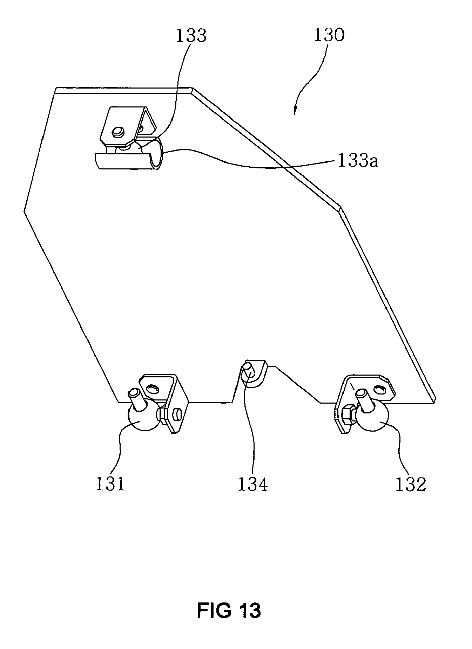

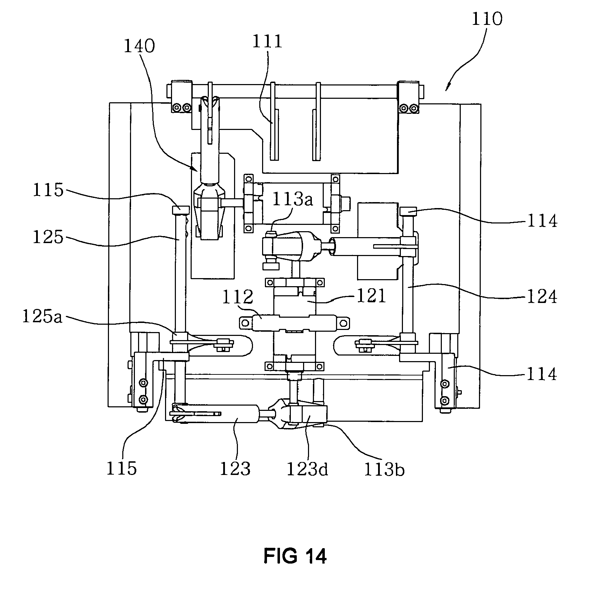

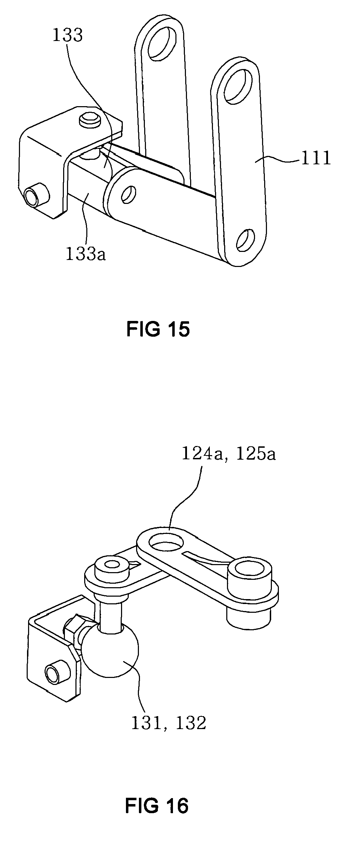

As shown in FIGS. 8 to 16, an automatic wall mounting system for a wall-mounted TV according to a second exemplary embodiment of the present invention includes a support plate 110 installed at a wall surface and supporting a left/right swiveling operation of the TV; a left/right swiveling part 120 for swiveling left/right the TV installed at the support plate 110; and a TV mount plate 130 for mounting the TV (not shown) in its front and coupling with the left/right swiveling part 120 in its rear.

The support plate 110 is of a plate shape in which it is installed at a wall surface of a living room and the like and is coupled in its front with the left/right swiveling part 120. In detail, the support plate 110 has gear box support rods 113a and 113b at its center part and central and lower part to support respective gear boxes 122d and 123d in state where a left/right swiveling motor 121 is fixed and supported at a center part of the left/right swiveling part 120. The support plate 110 has shaft rotation supports 114 and 115 at its both upper and lower sides, respectively. The shaft rotation supports 114 and 115 each axially rotatably insert and support upper and lower ends of first and second rotary shafts 124 and 125.

A hinge connector 111 is provided at a rear and upper part of the TV mount plate 130, and enables left/right swiveling of the TV mount plate 130 about the support plate 110.

In the present invention, the hinge connector 111 uses a hinge connector of an up/down tilting part 140 for tilting the TV up/down. A description of construction and operation of the up/down tilting part 140 will be omitted below.

The support plate 110 has a motor support bracket 112 at its lower and central part. The motor support bracket 112 covers and supports the left/right swiveling motor 121. The motor support bracket 112 has a "U"-shaped support pin latch 112a at its center. The "U"-shaped support pin latch 112a stably mounts a rotary support pin 134 provided at a rear and lower central part of the TV mount plate 130 such that the TV mount plate 130 stably tilts left/right when the left/right swiveling part 120 is activated.

The support plate 110 can serve as an elevating plate such that the TV can elevate and descend in an up/down direction. The elevating plate is slidably coupled up/down to a fixing plate (not shown) fixed and installed at a wall surface.

The left/right swiveling part 120 is coupled at one side to the support plate 110, and is coupled at the other side to the TV mount plate 130 to tilt the TV by a desired angle. The left/right swiveling part 120 includes the left/right swiveling motor 121, gear parts 122 and 123, and the first and second rotary shafts 124 and 125.

Each constituent element of the left/right swiveling part 120 will be in detail described below.

The left/right swiveling motor 121 is fixed and installed at a center of the support plate 110 by a separate coupling unit such as a bolt. The left/right swiveling motor 121 has driving shafts 121a and 121b at upper and lower ends, respectively. In particular, the left/right swiveling motor 121 enables forward/reversible rotation by a desired rotation angle, thereby forward/reversibly rotating rod screws 122b and 123b geared with the respective driving shafts 121a and 121b by a desired rotation angle in vertical directions of the driving shafts 121a and 121b.

The gear parts 122 and 123 each connect with the driving shafts 121a and 121b of the left/right swiveling motor 121, and concurrently gear and ungear screw housings 122c and 123c by the same length using rotation of the driving shafts 121a and 121b. The gear parts 122 and 123 have connection links 122a and 123a at their front ends. In detail, the gear parts 122 and 123 include the rod screws 122b and 123b and the screw housings 122c and 123c. The rod screws 122b and 123b are engaged with the driving shafts 121a and 121b, and rotate, remaining in place, in vertical directions of the driving shafts 121a and 121b. The screw housings 122c and 123c are screwed with the rod screws 122b and 123b. The screw housings 122c and 123c spirally move left/right depending on the rotation of the rod screws 122b and 123b, and axially rotate first and second rotary shafts 124 and 125 using the connection links 122a and 123a.

The driving shafts 121a and 121b and the rod screws 122b and 123b are of a worm gear type that is a gear combination type in which they generate rotary forces in vertical directions to each other, thereby concurrently gearing and ungearing the screw housings 122c and 123c. In addition, various gear combination types would be possible as long as satisfying a condition of generating the rotary force in the vertical direction.

The first rotary shaft 124 is of a rod shape. The first rotary shaft 124 is integrally coupled with the connection link 122a of the gear part 122, and rotatably installed at the shaft rotation support 114 provided right from the center of the support plate 110. The first rotary shaft 124 has a connector 124a connecting with a connector connection part 131 of the TV mount plate 130 at its lower end, respectively.

The connector 124a is of a "┐"-shape in which it extends toward a center of the left/right swiveling part 120 and is again bent and extends toward the TV mount plate 130.

The second rotary shaft 125 is of a rod shape. The second rotary shaft 125 has a connector 125a connecting with a connector connection part 132 of the TV mount plate 130 at its circumference of the same height as the connector 124a of the first rotary shaft 124. The second rotary shaft 125 is rotatably installed at the shaft rotation support 115 provided at the other side of the support plate 110 that is opposite to the first rotary shaft 124 from the center of the support plate 110.

The TV mount plate 130 is of a plate shape in which it mounts the TV in its front, and has a hinge connection part 133 connecting with the hinge connector 111 of the support plate 110 at its rear and upper central part and has connector connection parts 131 and 132 connecting with the respective connectors 124a and 125a of the left/right swiveling part 120 at its rear and lower both-side parts.

Connection parts 133, 131, and 132 of the TV mount plate 130 are constituted of ball joints for facilitating left/right swiveling. The connection parts 133, 131, and 132 are associated with the hinge connector 112 of the support plate 110 and the respective connectors 124a and 125a of the left/right tiling part 120.

The hinge connection part 133 of the TV mount plate 130 connecting with the hinge connector 111 of the support plate 110 further includes a guide socket 133a sliding left/right as covering the ball joints.

The automatic wall mounting system for a wall-mounted TV according to the second exemplary embodiment of the present invention is completed in assembly of its constituent parts for performing a TV left/right swiveling operation, by fixing and installing the left/right swiveling motor 121 of the left/right swiveling part 120 at the support plate 110 by the motor support bracket 112, and rotatably coupling the first and second rotary shafts 124 and 125 of the left/right swiveling part 120 to the shaft rotation supports 114 and 115 provided at both sides of the support plate 110, respectively, and connecting the connectors 124a and 125a of the first and second rotary shafts 124 and 125 to the connector connection parts 131 and 132 of the TV mount plate 130, respectively and at the same time, connecting the hinge connector 111 of the support plate 110 to the hinge connection part 133 of the TV mount plate 130.

An operation of the assembly-completed automatic wall mounting system for a wall-mounted TV when it is intended to tilt the TV in its screen position by a desired angle in any one direction of left/right, for example, when it is intended to tilt a screen toward a viewer positioned right from the TV will be described as follows. By activating the left/right swiveling motor 121 in a desired direction, the screw housings 122c and 123c move toward the left/right swiveling motor 121 through the rod screws 122b and 123b engaged with the respective driving shafts 121a and 121b. If so, as the screw housings 122c and 123c move, the first rotary shaft 124 axially rotates counterclockwise by a predetermined rotation angle by the connection links 122a and 123a provided at the front ends of the screw housings 122c and 123c. At the same time, the connector 124a of the first rotary shaft 124 rotatively moves in a direction of advancing to the front, thereby pushing the TV mount plate 130 to the front. In association with this, even the second rotary shaft 125 axially rotates in the same direction as that of the first rotary shaft 124 while the connector 125a rotatively moves in a direction of retreating to the rear, thereby pulling the TV mount plate 130 to the rear. As a result, the whole TV mount plate 130 tilts right, thereby swiveling the TV screen toward the right viewer.

An operation of the automatic wall mounting system for a wall-mounted TV when it is intended to tilt the screen toward a viewer positioned left from the TV will be described as follows. By activating the left/right swiveling motor 121 in a desired direction, the screw housings 122c and 123c move in a direction of getting distant away from the left/right swiveling motor 121 through the rod screws 122b and 123b engaged with the respective driving shafts 121a and 121b. If so, as the screw housings 122c and 123c move, the first rotary shaft 124 axially rotates clockwise by a predetermined rotation angle by the connection links 122a and 123a provided at the front ends of the screw housings 122c and 123c. At the same time, the connector 124a of the first rotary shaft 124 rotatively moves in a direction of retreating to the rear, thereby pulling the TV mount plate 130 to the rear. In association with this, even the second rotary shaft 125 axially rotates in the same direction as that of the first rotary shaft 124 while the connector 125a rotatively moves in a direction of advancing to the front, thereby pushing the TV mount plate 130 to the front. As a result, the whole TV mount plate 130 tilts left, thereby swiveling the TV screen toward the left viewer.

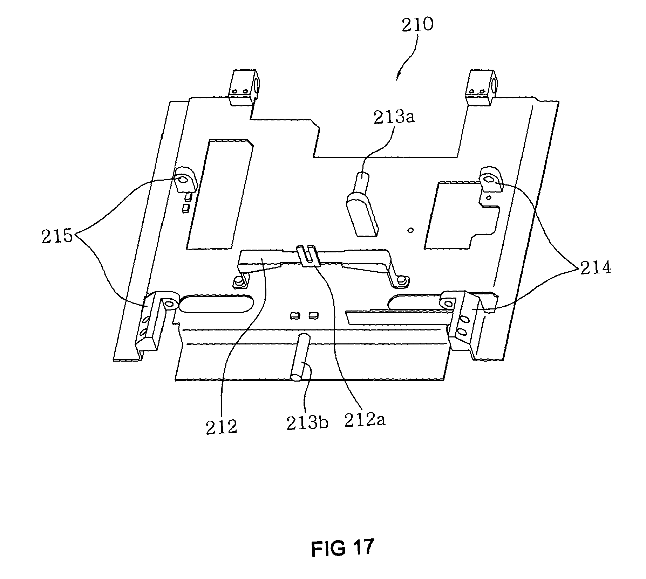

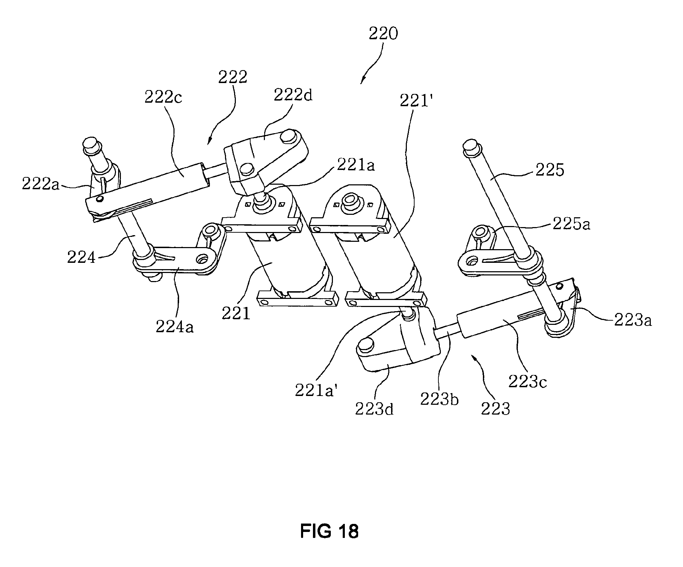

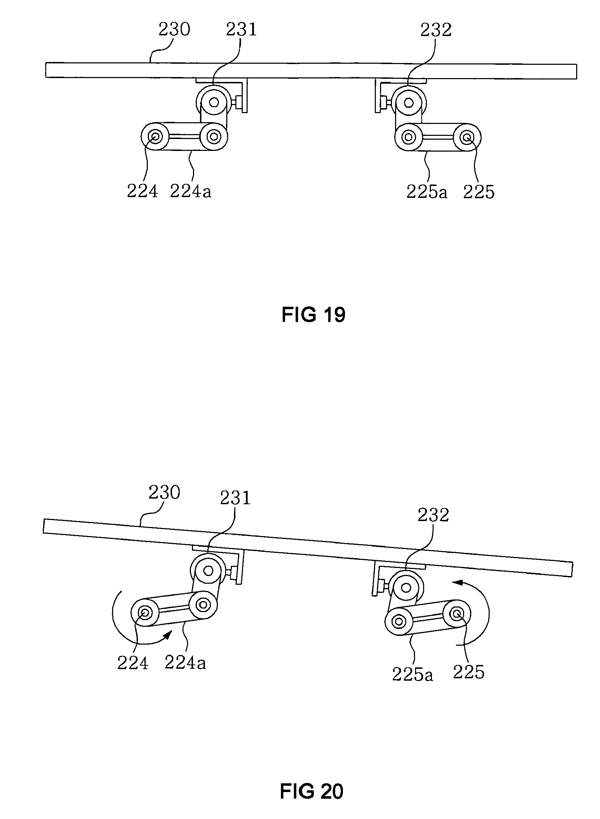

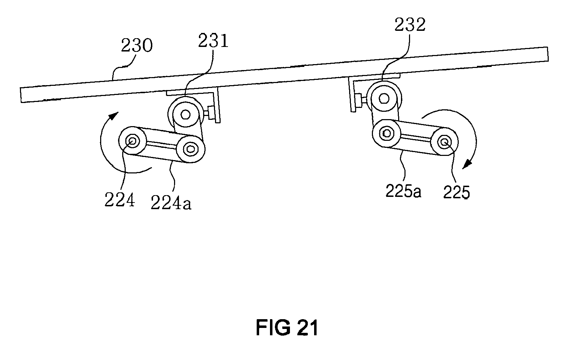

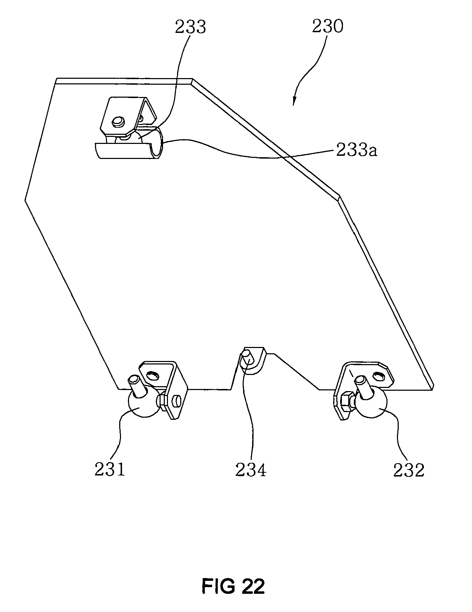

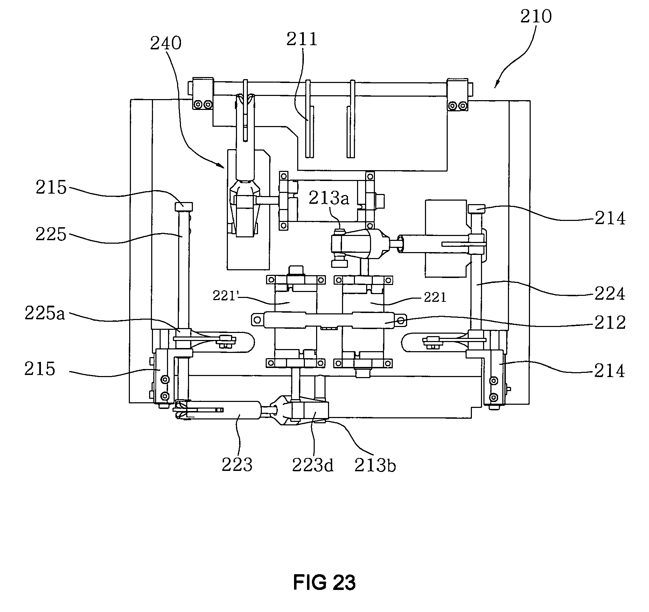

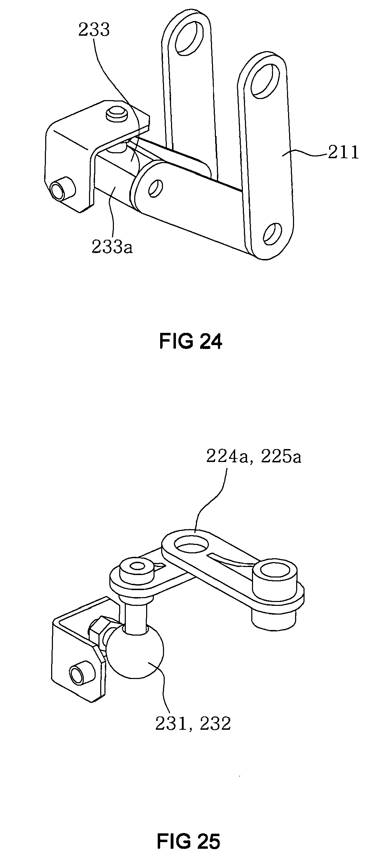

As shown in FIGS. 17 to 25, an automatic wall mounting system for a wall-mounted TV according to a third exemplary embodiment of the present invention includes a support plate 210 installed at a wall surface and supporting a left/right swiveling operation of the TV; a left/right swiveling part 220 for swiveling left/right the TV installed at the support plate 210; and a TV mount plate 230 for mounting the TV (not shown) in its front and coupling with the left/right swiveling part 220 in its rear.

The support plate 210 is of a plate shape in which it is installed at a wall surface of a living room and the like and is coupled in its front with the left/right swiveling part 220. In detail, the support plate 210 has gear box support rods 213a and 213b at its center part and central and lower part to support respective gear boxes 222d and 223d in state where a pair of left/right swiveling motors 221 and 221' are fixed and supported at a center part of the left/right swiveling part 220. The support plate 210 has shaft rotation supports 214 and 215 at its both upper and lower sides, respectively. The shaft rotation supports 214 and 215 each axially rotatably insert and support upper and lower ends of first and second rotary shafts 224 and 225.

A hinge connector 211 is provided at a rear and upper part of the TV mount plate 230, and enables left/right swiveling of the TV mount plate 230 about the support plate 210.

In the present invention, the hinge connector 211 uses a hinge connector of an up/down tilting part 240 for tilting the TV up/down. A description of construction and operation of the up/down tilting part 240 will be omitted below.

The support plate 210 has a motor support bracket 212 at its lower and central part. The motor support bracket 212 covers and supports the left/right swiveling motors 221 and 221'. The motor support bracket 212 has a "U"-shaped support pin latch 212a at its center. The "U"-shaped support pin latch 212a stably mounts a rotary support pin 234 provided at a rear and lower central part of the TV mount plate 230 such that the TV mount plate 230 stably tilts left/right when the left/right swiveling part 220 is activated.

The support plate 210 can serve as an elevating plate such that the TV can elevate and descend in an up/down direction. The elevating plate is slidably coupled up/down to a fixing plate (not shown) fixed and installed at a wall surface.

The left/right swiveling part 220 is coupled at one side to the support plate 210, and is coupled at the other side to the TV mount plate 230 to tilt the TV by a desired angle. The left/right swiveling part 220 includes the pair of the left/right swiveling motors 221 and 221', gear parts 222 and 223, and the first and second rotary shafts 224 and 225.

Each constituent element of the left/right swiveling part 220 will be in detail described below.

The left/right swiveling motors 221 and 221' are fixed and installed at a center of the support plate 210 by a separate coupling unit such as a bolt. The left/right swiveling motors 221 and 221' have driving shafts 221a and 221a', respectively. In particular, the left/right swiveling motors 221 and 221' enable forward/reversible rotation by a desired rotation angle, thereby forward/reversibly rotating rod screws 222b and 223b geared with the respective driving shafts 221a and 221a' by a desired rotation angle in vertical directions of the driving shafts 221a and 221a'.

The gear parts 222 and 223 each connect with the driving shafts 221a and 221a' of the pair of the left/right swiveling motors 221 and 221', and concurrently gear and ungear screw housings 222c and 223c by the same length using rotation of the driving shafts 221a and 221a'. The gear parts 222 and 223 have connection links 222a and 223a at their front ends. In detail, the gear parts 222 and 223 include the rod screws 222b and 223b and the screw housings 222c and 223c. The rod screws 222b and 223b are engaged with the respective driving shafts 221a and 221a', and rotate, remaining in place, in vertical directions of the driving shafts 221a and 221a'. The screw housings 222c and 223c are screwed with the rod screws 222b and 223b. The screw housings 222c and 223c spirally move left/right depending on the rotation of the rod screws 222b and 223b, and axially rotate first and second rotary shafts 224 and 225 using the connection links 222a and 223a.

The driving shafts 221a and 221a' and the rod screws 222b and 223b are of a worm gear type that is a gear combination type in which they generate rotary forces in vertical directions to each other, thereby concurrently gearing and ungearing the screw housings 222c and 223c. In addition, various gear combination types would be possible as long as satisfying a condition of generating the rotary force in the vertical direction.

The first rotary shaft 224 is of a rod shape. The first rotary shaft 224 is integrally coupled with the connection link 222a of the gear part 222, and rotatably installed at the shaft rotation support 214 provided right from the center of the support plate 210. The first rotary shaft 224 has a connector 224a connecting with a connector connection part 231 of the TV mount plate 230 at its lower end, respectively.

The connector 224a is of a "┐"-shape in which it extends toward a center of the left/right swiveling part 220 and is again bent and extends toward the TV mount plate 230.

The second rotary shaft 225 is of a rod shape. The second rotary shaft 225 has a connector 225a connecting with a connector connection part 232 of the TV mount plate 230 at its circumference of the same height as the connector 224a of the first rotary shaft 224. The second rotary shaft 225 is rotatably installed at the shaft rotation support 215 provided at the other side of the support plate 210 that is opposite to the first rotary shaft 224 from the center of the support plate 210.

The TV mount plate 230 is of a plate shape in which it mounts the TV in its front, and has a hinge connection part 233 connecting with the hinge connector 211 of the support plate 210 at its rear and upper central part and has connector connection parts 231 and 232 connecting with the respective connectors 224a and 225a of the left/right swiveling part 220 at its rear and lower both-side parts.

Connection parts 233, 231, and 232 of the TV mount plate 230 are constituted of ball joints for facilitating left/right swiveling. The connection parts 233, 231, and 232 are associated with the hinge connector 212 of the support plate 210 and the respective connectors 224a and 225a of the left/right tiling part 220.

The hinge connection part 233 of the TV mount plate 230 connecting with the hinge connector 211 of the support plate 210 further includes a guide socket 233a sliding left/right as covering the ball joints.

The automatic wall mounting system for a wall-mounted TV according to the third exemplary embodiment of the present invention is completed in assembly of its constituent parts for performing a TV left/right swiveling operation, by fixing and installing the pair of the left/right swiveling motors 221 and 221' of the left/right swiveling part 220 at the support plate 210 by the motor support bracket 212, and rotatably coupling the first and second rotary shafts 224 and 225 of the left/right swiveling part 220 to the shaft rotation supports 214 and 215 provided at both sides of the support plate 210, respectively, and connecting the connectors 224a and 225a of the first and second rotary shafts 224 and 225 to the connector connection parts 231 and 232 of the TV mount plate 230, respectively and at the same time, connecting the hinge connector 211 of the support plate 210 to the hinge connection part 233 of the TV mount plate 230.

An operation of the assembly-completed automatic wall mounting system for a wall-mounted TV when it is intended to tilt the TV in its screen position by a desired angle in any one direction of left/right, for example, when it is intended to tilt a screen toward a viewer positioned right from the TV will be described as follows. By activating the pair of the left/right swiveling motors 221 and 221' in a desired direction, the screw housings 222c and 223c move toward the respective left/right swiveling motors 221 and 221' through the rod screws 222b and 223b engaged with the respective driving shafts 221a and 221a'. If so, as the screw housings 222c and 223c move, the first rotary shaft 224 axially rotates counterclockwise by a predetermined rotation angle by the connection links 222a and 223a provided at the front ends of the screw housings 222c and 223c. At the same time, the connector 224a of the first rotary shaft 224 rotatively moves in a direction of advancing to the front, thereby pushing the TV mount plate 230 to the front. In association with this, even the second rotary shaft 225 axially rotates in the same direction as that of the first rotary shaft 224 while the connector 225a rotatively moves in a direction of retreating to the rear, thereby pulling the TV mount plate 230 to the rear. As a result, the whole TV mount plate 230 tilts right, thereby swiveling the TV screen toward the right viewer.

An operation of the automatic wall mounting system for a wall-mounted TV when it is intended to tilt the screen toward a viewer positioned left from the TV will be described as follows. By activating the pair of the left/right swiveling motors 221 and 221' in a desired direction, the screw housings 222c and 223c move in a direction of getting distant away from the left/right swiveling motors 221 and 221' through the rod screws 222b and 223b engaged with the respective driving shafts 221a and 221a'. If so, as the screw housings 222c and 223c move, the first rotary shaft 224 axially rotates clockwise by a predetermined rotation angle by the connection links 222a and 223a provided at the front ends of the screw housings 222c and 223c. At the same time, the connector 224a of the first rotary shaft 224 rotatively moves in a direction of retreating to the rear, thereby pulling the TV mount plate 230 to the rear. In association with this, even the second rotary shaft 225 axially rotates in the same direction as that of the first rotary shaft 224 while the connector 225a rotatively moves in a direction of advancing to the front, thereby pushing the TV mount plate 230 to the front. As a result, the whole TV mount plate 230 tilts left, thereby swiveling the TV screen toward the left viewer.

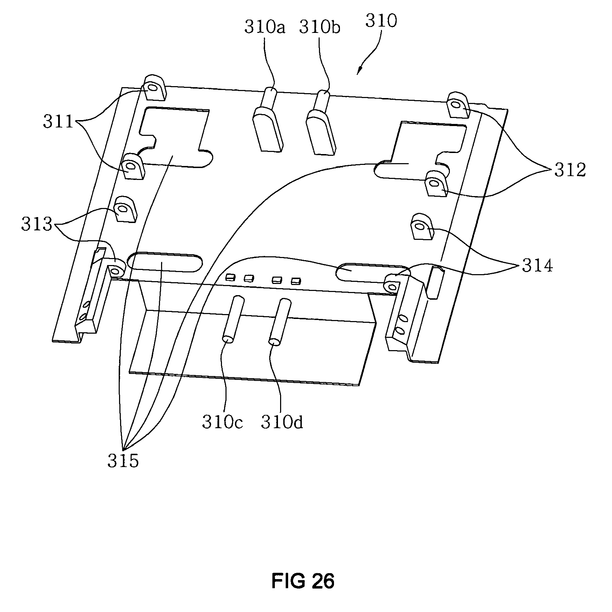

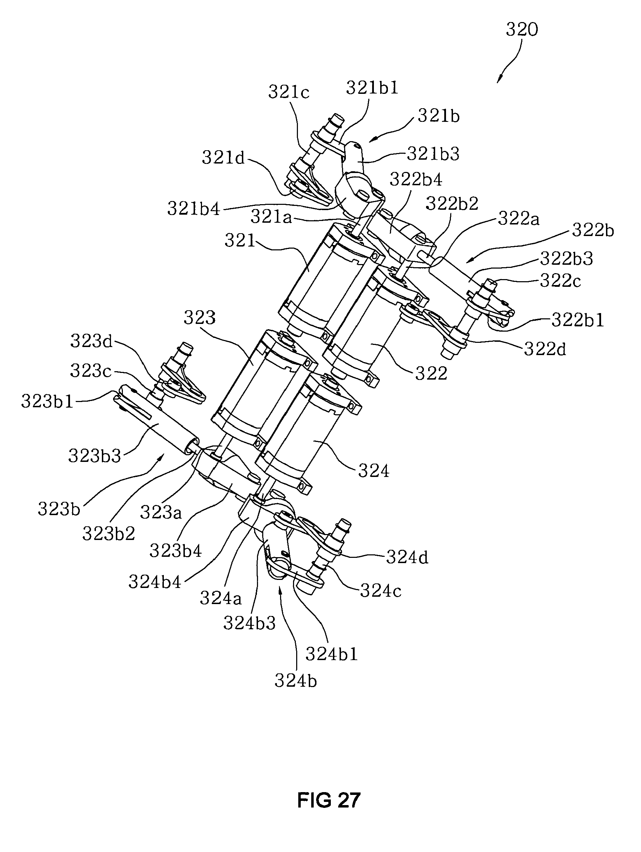

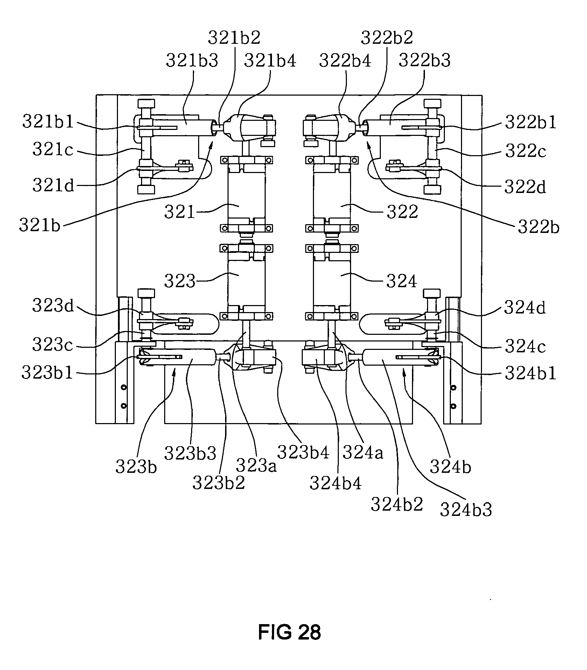

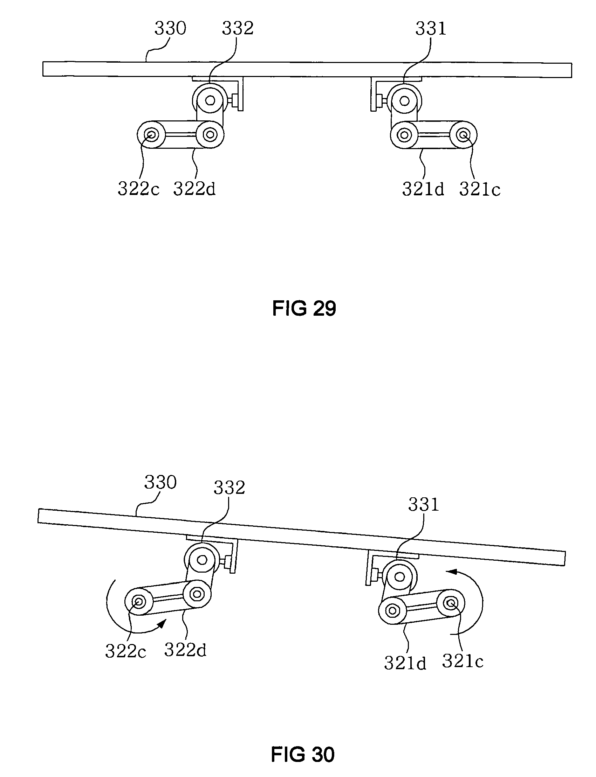

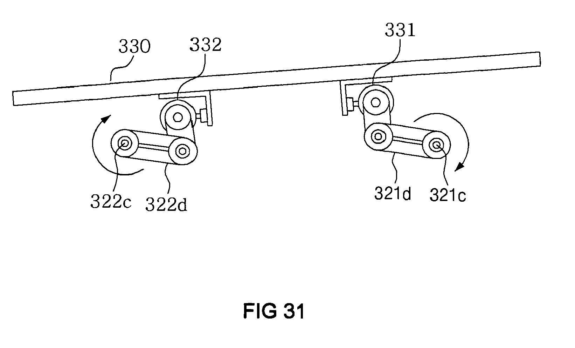

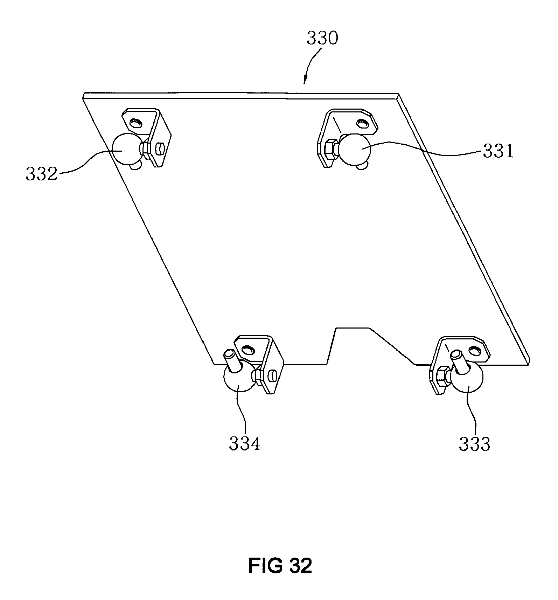

As shown in FIGS. 26 to 32, an automatic wall mounting system for a wall-mounted television (TV) according to a fourth exemplary embodiment of the present invention includes a support plate 310 installed at a wall surface and supporting a left/right swiveling operation of the TV; a left/right swiveling part 320 for swiveling left/right the TV installed at the support plate 310; and a TV mount plate 330 for mounting the TV (not shown) in its front and coupling with the left/right swiveling part 320 in its rear.

The support plate 310 is of a plate shape in which it is installed at a wall surface of a living room and the like and is coupled in its front with the left/right swiveling part 320. In detail, the support plate 310 has gear box support rods 310a, 310b, 310c, and 310d at its upper and lower parts to support respective gear boxes 321b4, 322b4, 323b4, and 324b4 in state where left/right swiveling motors 321, 322, 323, and 324 are fixed and supported at a center part of the left/right swiveling part 320. The support plate 310 has shaft rotation supports 311, 312, 313, and 314 at its both sides, respectively. The shaft rotation supports 311, 312, 313, and 314 each insert and support upper and lower ends of rotary shafts 321c, 322c, 323c, and 324c such that the respective rotary shafts 321c, 322c, 323c, and 324c can axially rotate.

The support plate 310 can serve as an elevating plate such that the TV can elevate and descend in an up/down direction. The elevating plate is slidably coupled up/down to a fixing plate (not shown) fixed and installed at a wall surface.

Non-described reference numeral 315 denotes through-holes for enabling passage of rotating connectors 321d, 322d, 323d, and 324d.

The left/right swiveling part 320 is coupled at one side to the support plate 310, and is coupled at the other side to the TV mount plate 330 to tilt the TV by a desired angle. The left/right swiveling part 320 includes the left/right swiveling motors 321, 322, 323, and 324, gear parts 321b, 322b, 323b, and 324b, and the rotary shafts 321c, 322c, 323c, and 324c.

Each constituent element of the left/right swiveling part 320 will be in detail described below.

The left/right swiveling motors 321, 322, 323, and 324 are fixed and installed at a center of the support plate 310 by a separate coupling unit such as a bolt. The left/right swiveling motors 321, 322, 323, and 324 have driving shafts 321a, 322a, 323a, and 324a, respectively. In particular, the left/right swiveling motors 321, 322, 323, and 324 enable forward/reversible rotation by a desired rotation angle, thereby forward/reversibly rotating rod screws 321b2, 322b2, 323b2, and 324b2 geared with the respective driving shafts 321a, 322a, 323a, and 324a by a desired rotation angle in vertical directions of the driving shafts 321a, 322a, 323a, and 324a.

The gear parts 321b, 322b, 323b, and 324b each connect with the driving shafts 321a, 322a, 323a, and 324a of the left/right swiveling motors 321, 322, 323, and 324, and concurrently gear and ungear screw housings 321b3, 322b3, 323b3, and 324b3 by the same length using rotation of the driving shafts 321a, 322a, 323a, and 324a. The gear parts 321b, 322b, 323b, and 324b have connection links 321b1, 322b1, 323b1, and 324b1 at their front ends. In detail, the gear parts 321b, 322b, 323b, and 324b include the rod screws 321b2, 322b2, 323b2, and 324b2 and the screw housings 321b3, 322b3, 323b3, and 324b3. The rod screws 321b2, 322b2, 323b2, and 324b2 are engaged with the driving shafts 321a, 322a, 323a, and 324a, and rotate, remaining in place, in vertical directions of the driving shafts 321a, 322a, 323a, and 324a. The screw housings 321b3, 322b3, 323b3, and 324b3 are screwed with the rod screws 321b2, 322b2, 323b2, and 324b2. The screw housings 321b3, 322b3, 323b3, and 324b3 spirally move left/right depending on the rotation of the rod screws 321b2, 322b2, 323b2, and 324b2, and axially rotate rotary shafts 321c, 322c, 323c, and 324c, respectively, using the connection links 321b1, 322b1, 323b1, and 324b1.

The respective driving shafts 321a, 322a, 323a, and 324a and rod screws 321b2, 322b2, 323b2, and 324b2 are of a worm gear type that is a gear combination type in which they generate rotary forces in vertical directions to each other, thereby concurrently gearing and ungearing the screw housings 321b3, 322b3, 323b3, and 324b3. In addition, various gear combination types would be possible as long as satisfying a condition of generating the rotary force in the vertical direction.

The rotary shafts 321c, 322c, 323c, and 324c are of a rod shape. The rotary shafts 321c, 322c, 323c, and 324c each are integrally coupled with the connection links 321b1, 322b1, 323b1, and 324b1 of the gear parts 321b, 322b, 323b, and 324b, and rotatably installed at the shaft rotation supports 311, 312, 313, and 314 provided right from the center of the support plate 310. The rotary shafts 321c, 322c, 323c, and 324c have connectors 321d, 322d, 323d, and 324d connecting with the TV mount plate 330 at their circumferences, respectively.

The connectors 321d, 322d, 323d, and 324d are of a "┐"-shape in which they extend toward the left/right swiveling motors 321, 322, 324, and 324 and are again bent and extend toward the TV mount plate 330.

The TV mount plate 330 is of a plate shape in which it mounts the TV in its front, and has connector connection parts 331, 332, 333, and 334 connecting with the respective connectors 321d, 322d, 323d, and 324d of the left/right swiveling part 320 in its rear.

The automatic wall mounting system for a wall-mounted TV according to the fourth exemplary embodiment of the present invention is completed in assembly of its constituent parts for performing a TV left/right swiveling operation, by fixing and installing the respective left/right swiveling motors 321, 322, 323, and 324 of the left/right swiveling part 320 at the support plate 310 by a separate coupling unit, and rotatably coupling the respective rotary shafts 321c, 322c, 323c, and 324c of the left/right swiveling part 320 to the shaft rotation supports 311, 312, 313, and 314 provided at both-side upper and lower ends of the support plate 310, respectively, and connecting the respective connectors 321d, 322d, 323d, and 324d of the rotary shafts 321c, 322c, 323c, and 324c to the respective connector connection parts 331, 332, 333, and 334 of the TV mount plate 330, respectively.

An operation of the assembly-completed automatic wall mounting system for a wall-mounted TV when it is intended to tilt the TV in its screen position by a desired angle in any one direction of left/right, for example, when it is intended to tilt a screen toward a viewer positioned right from the TV will be described as follows. By activating the left/right swiveling motors 321, 322, 323, and 324 in a desired direction, part of the screw housings 322b3 and 323b3 move toward the left/right swiveling motors 322 and 323 through the rod screws 321b2, 322b2, 323b2, and 324b2 engaged with the respective driving shafts 321a, 322a, 323a, and 324a and at the same time, the rest of the screw housing 321b3 and 324b3 move opposite the left/right swiveling motors 321 and 324. If so, as the screw housings 321b3, 322b3, 323b3, and 324b3 move, the respective rotary shafts 321c, 322c, 323c, and 324c axially rotate by a predetermined rotation angle by the connection links 321b1, 322b1, 323b1, and 324b1 provided at the front ends of the screw housings 321b3, 322b3, 323b3, and 324b3. At the same time, the connectors 322d and 323d of part of the rotary shafts 322c and 324c rotatively move in a direction of advancing to the front, thereby pushing the TV mount plate 330 to the front. In association with this, even the connectors 321d and 323d of part of the rotary shafts 321c and 323c rotatively move in a direction of retreating to the rear, thereby pulling the TV mount plate 330 to the rear. As a result, the whole TV mount plate 330 tilts right, thereby swiveling the TV screen toward the right viewer.

An operation of the automatic wall mounting system for a wall-mounted TV when it is intended to tilt the screen toward a viewer positioned left from the TV will be described as follows. By activating the left/right swiveling motors 321, 322, 323, and 324 in a desired direction, part of the screw housings 321b3 and 324b3 move toward the left/right swiveling motors 321 and 324 through the rod screws 321b2, 322b2, 323b2, and 324b2 engaged with the respective driving shafts 321a, 322a, 323a, and 324a and at the same time, the rest of the screw housing 322b3 and 323b3 move opposite the left/right swiveling motors 322 and 323. If so, as the screw housings 321b3, 322b3, 323b3, and 324b3 move, the respective rotary shafts 321c, 322c, 323c, and 324c axially rotate by a predetermined rotation angle by the connection links 321b1, 322b1, 323b1, and 324b1 provided at the front ends of the screw housings 321b3, 322b3, 323b3, and 324b3. At the same time, the connectors 321d and 323d of part of the rotary shafts 321c and 323c rotatively move in a direction of advancing to the front, thereby pushing the TV mount plate 330 to the front. In association with this, even the connectors 322d and 324d rotatively move in a direction of retreating to the rear, thereby pulling the TV mount plate 330 to the rear. As a result, the whole TV mount plate 330 tilts left, thereby swiveling the TV screen toward the left viewer.

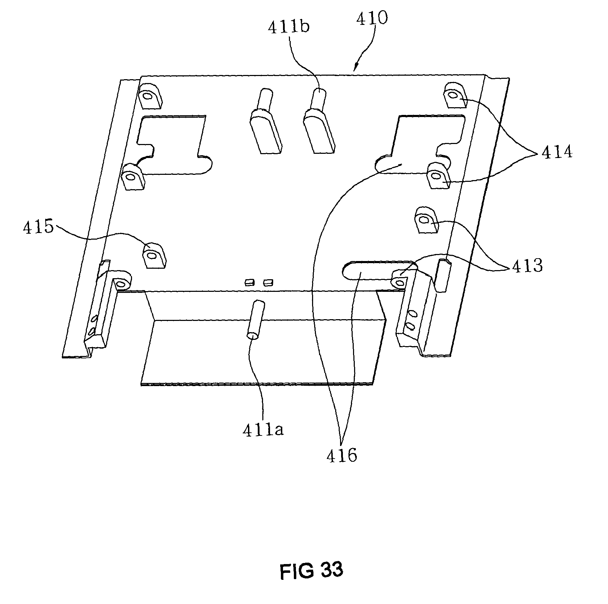

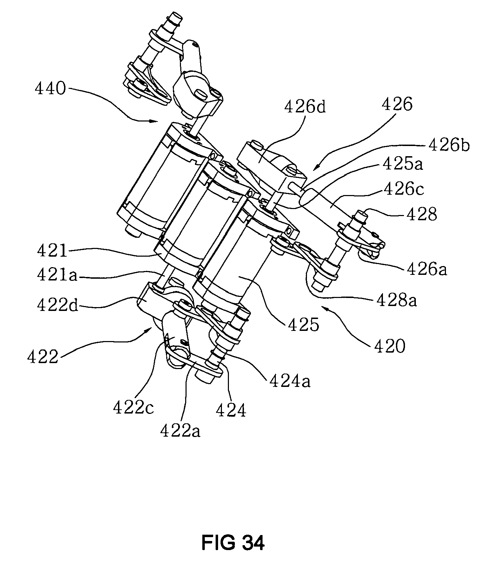

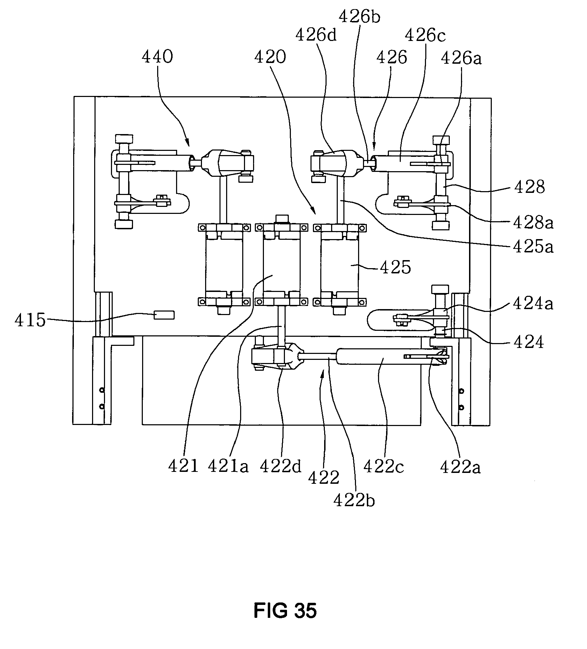

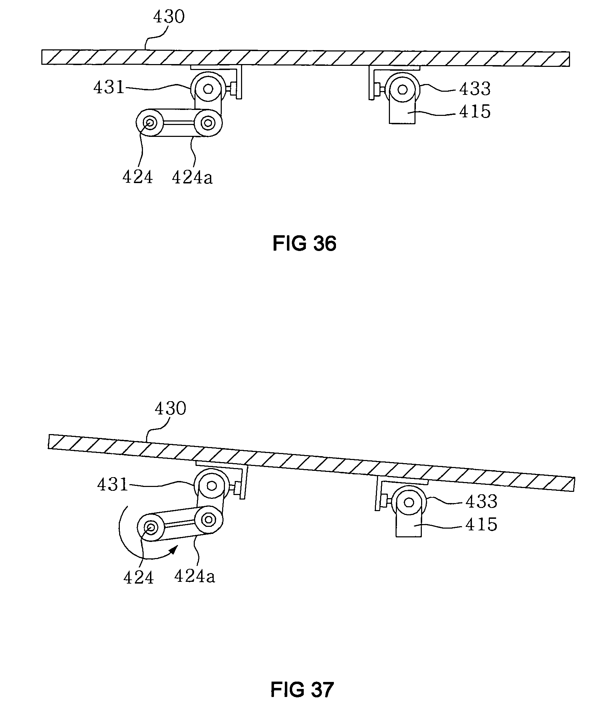

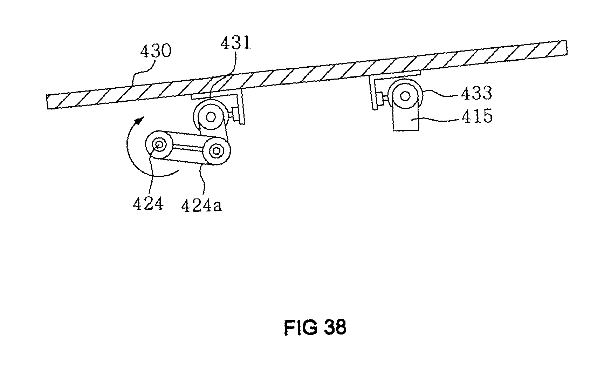

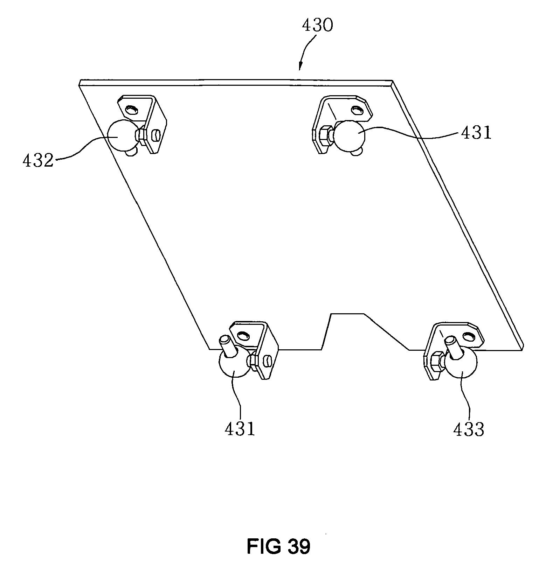

As shown in FIGS. 33 to 39, an automatic wall mounting system for a wall-mounted television (TV) according to a fifth exemplary embodiment of the present invention includes a support plate 410 installed at a wall surface and supporting a left/right swiveling operation of the TV; a left/right swiveling part 420 for swiveling left/right the TV installed at the support plate 410; and a TV mount plate 430 for mounting the TV (not shown) in its front and coupling with the left/right swiveling part 420 in its rear.

The support plate 410 is of a plate shape in which it is installed at a wall surface of a living room and the like and is coupled in its front with the left/right swiveling part 420. In detail, the support plate 410 has gear box support rods 411a and 411b at its central upper and lower parts to support respective gear boxes 422d and 426d in state where left/right swiveling motors 421 and 425 are fixed and supported in parallel at a center part of the left/right swiveling part 420. The support plate 410 has shaft rotation supports 413 and 414 at its both sides, respectively. The shaft rotation supports 413 and 414 each insert and support upper and lower ends of rotary shafts 424 and 428 such that the rotary shafts 424 and 428 can axially rotate.

A shaft support 415 is provided in a width direction at the other side of the shaft rotation support 413, and axially supports a hinge connection part 433 of the TV mount plate 430.

An up/down tilting part 440 (not described below) is provided in a width direction at the other side of the shaft rotation support 414, and is controlled in operation together with the left/right swiveling part 425 to tilt up/down the TV mount plate 430.

The support plate 410 can serve as an elevating plate such that the TV can elevate and descend in an up/down direction. The elevating plate is slidably coupled up/down to a fixing plate (not shown) fixed and installed at a wall surface.

Non-described reference numeral 416 denotes through-holes for enabling passage of rotating connectors 424a and 428a.

The left/right swiveling part 420 is coupled at one side to the support plate 410, and is coupled at the other side to the TV mount plate 430 to tilt the TV by a desired angle. The left/right swiveling part 420 includes the left/right swiveling motors 421 and 425, gear parts 422 and 426, and the rotary shafts 424 and 428.

Each constituent element of the left/right swiveling part 420 will be in detail described below.

The left/right swiveling motors 421 and 425 are fixed and installed at a center of the support plate 410 by a separate coupling unit such as a bolt. The left/right swiveling motors 421 and 425 have driving shafts 421a and 425a at upper and lower ends, respectively. In particular, the left/right swiveling motors 421 and 425 enable forward/reversible rotation by a desired rotation angle, thereby forward/reversibly rotating rod screws 422b and 426b geared with the respective driving shafts 421a and 425a by a desired rotation angle in vertical directions of the driving shafts 421a and 425a.

The gear parts 422 and 426 each connect with the driving shafts 421a and 425a of the left/right swiveling motors 421 and 425, and concurrently gear and ungear screw housings 422c and 426c by the same length in an opposite direction, respectively, using rotation of the driving shafts 421a and 425a. For example, when the lower screw housing 422c moves toward the left/right swiveling part 421 by a predetermined distance, the upper screw housing 426c concurrently moves opposite by the same distance. The gear parts 422 and 426 have connection links 422a and 426a at their front ends. In detail, the gear parts 422 and 426 include the rod screws 422b and 426b and the screw housings 422c and 426c. The rod screws 422b and 426b are engaged with the driving shafts 421a and 425a, and rotate, remaining in place, in vertical directions of the driving shafts 421a and 425a. The screw housings 422c and 426c are screwed with the rod screws 422b and 426b. The screw housings 422c and 426c spirally move left/right depending on the rotation of the rod screws 422b and 426b, and axially rotate respective rotary shafts 424 and 428 using the connection links 422a and 426a.

The driving shafts 421a and 425a and the rod screws 422b and 426b are of a worm gear type that is a gear combination type in which they generate rotary forces in vertical directions to each other, thereby concurrently gearing and ungearing the screw housings 422c and 426c in an opposite direction. In addition, various gear combination types would be possible as long as satisfying a condition of generating the rotary force in the vertical direction.

The rotary shafts 424 and 428 are of a rod shape. The rotary shafts 424 and 428 are integrally coupled with the connection links 422a and 426a of the gear parts 422 and 426, and rotatably installed at the shaft rotation supports 413 and 414 provided right from the center of the support plate 410. The rotary shafts 424 and 428 have the connectors 424a and 428a connecting with the TV mount plate 430 at its circumferences, respectively.

The connectors 424a and 428a are of a "┐"-shape in which they extend toward a center of the left/right swiveling part 420 and are again bent and extend toward the TV mount plate 430.

The TV mount plate 430 is of a plate shape in which it mounts the TV in its front, and has connector connection parts 431 and 432 connecting with the respective connectors 424a and 428a of the left/right swiveling part 420 in its rear.

The automatic wall mounting system for a wall-mounted TV according to the fifth exemplary embodiment of the present invention is completed in assembly of its constituent parts for performing a TV left/right swiveling operation, by fixing and installing the left/right swiveling motor 421 of the left/right swiveling part 420 at the support plate 410 by a separate coupling unit (not shown), and rotatably coupling the rotary shafts 424 and 428 of the left/right swiveling part 420 to the upper and lower shaft rotation supports 413 and 414 of the support plate 410, respectively, and connecting the connectors 424a and 428a of the rotary shafts 424 and 428 to the connector connection parts 431 and 432 of the TV mount plate 430, respectively.

An operation of the assembly-completed automatic wall mounting system for a wall-mounted TV when it is intended to tilt the TV in its screen position by a desired angle in any one direction of left/right, for example, when it is intended to tilt a screen toward a viewer positioned right from the TV will be described as follows. By activating the left/right swiveling motors 421 and 425 in a desired direction, the screw housing 422c moves opposite the left/right swiveling motor 421 through the rod screws 422b and 426b engaged with the respective driving shafts 421a and 425a and at the same time, the screw housing 426c moves toward the left/right swiveling motor 425. If so, as the screw housings 422c and 426c move, the rotary shafts 424 and 428 each axially rotate by a predetermined rotation angle by the connection links 422a and 426a provided at the front ends of the screw housings 422c and 426c. At the same time, the connectors 424a and 428a of the rotary shafts 424 and 428 rotatively move in a direction of advancing to the front, thereby pushing the TV mount plate 430 to the front using the shaft support 415 as a rotary shaft, and resultantly swiveling the TV screen toward the right viewer.

An operation of the an automatic wall mounting system for a wall-mounted TV when it is intended to tilt the screen toward a viewer positioned left from the TV will be described as follows. By activating the left/right swiveling motors 421 and 425 in a desired direction, the screw housing 422c moves toward the left/right swiveling motor 421 through the rod screws 422b and 426b engaged with the respective driving shafts 421a and 425a and at the same time, the screw housing 426c moves opposite the left/right swiveling motor 425. If so, as the screw housings 422c and 426c move, the respective rotary shafts 424 and 428 each axially rotate by a predetermined rotation angle by the connection links 422a and 426a provided at the front ends of the screw housings 422c and 426c. At the same time, the connectors 424a and 428a of the rotary shafts 424 and 428 rotatively move in a direction of retreating to the rear, thereby forcing the TV mount plate 430 to the rear using the shaft support 415 as the rotary shaft, and resultantly swiveling the TV screen toward the left viewer.

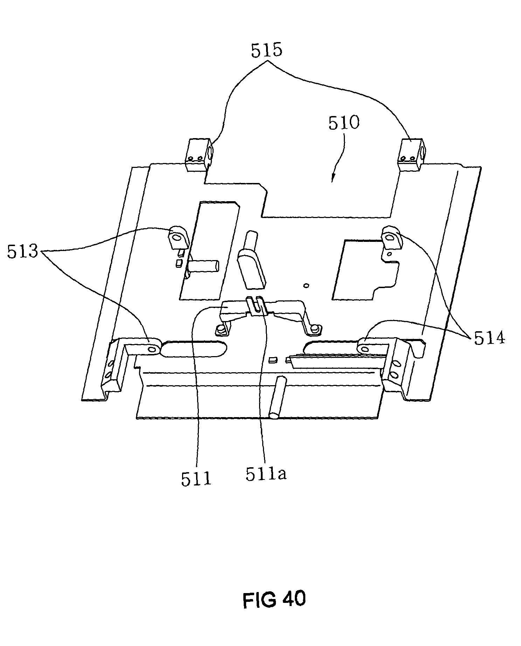

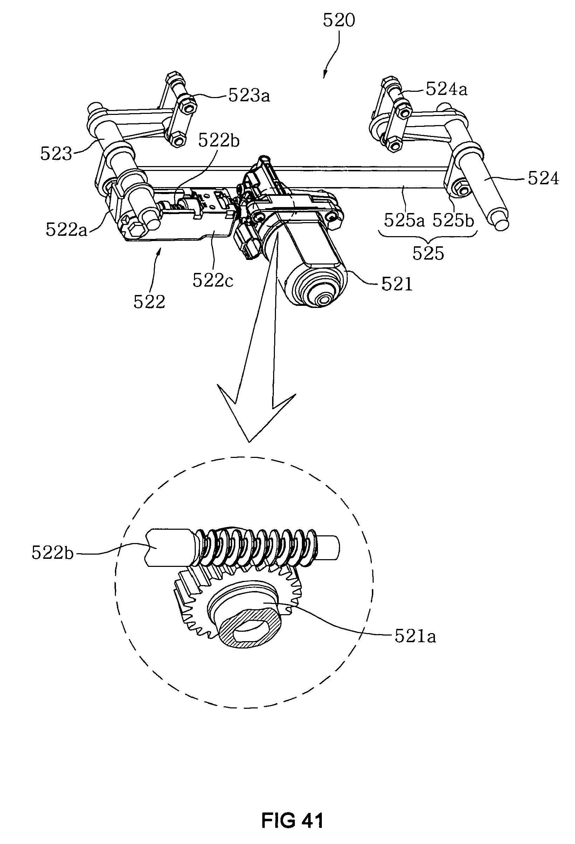

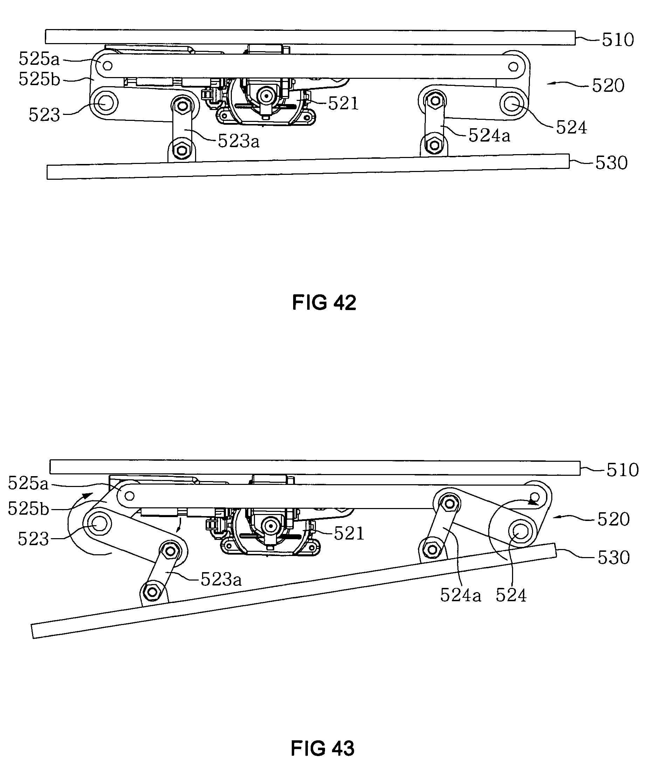

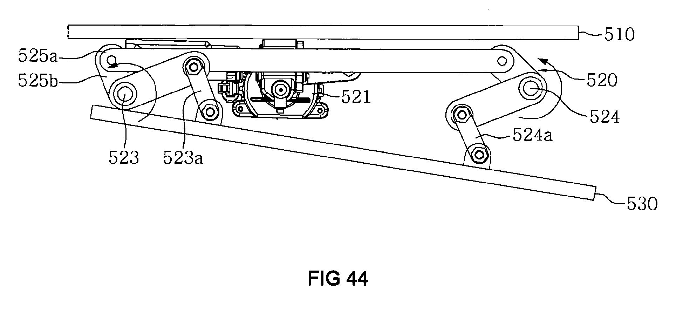

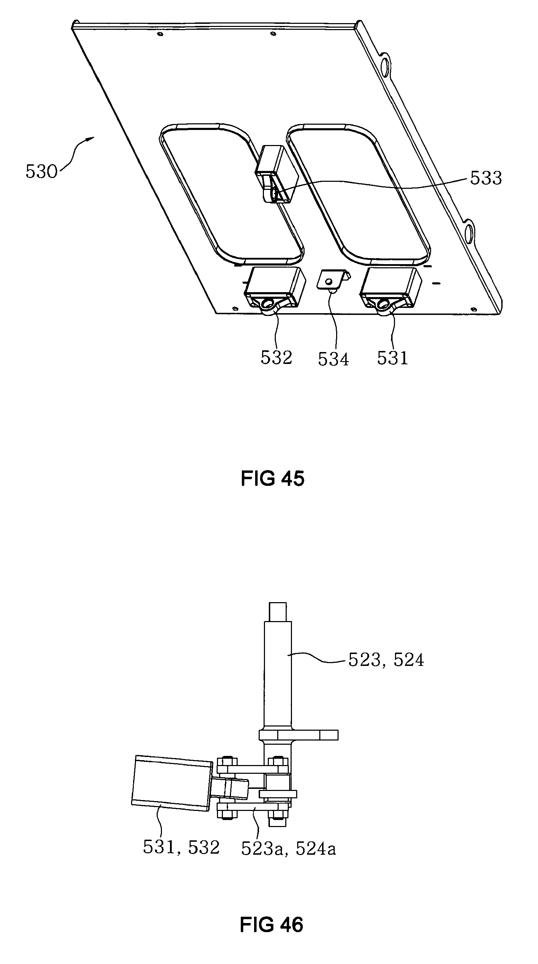

As shown in FIGS. 40 to 46, an automatic wall mounting system for a wall-mounted television (TV) according to a sixth exemplary embodiment of the present invention includes a support plate 510 installed at a wall surface and supporting a left/right swiveling operation of the TV; a left/right swiveling part 520 installed at the support plate 510, and swiveling left/right the TV; and a TV mount plate 530 for mounting the TV (not shown) in its front and coupling with the left/right swiveling part 520 in its rear.

The support plate 510 is of a plate shape in which it is installed at a wall surface of a living room and the like and is coupled in its front with the left/right swiveling part 520. In detail, the support plate 510 has a motor support bracket 511 for fixing and supporting a left/right swiveling motor 521 of the left/right swiveling part 520. The support plate 510 has shaft rotation supports 513 and 514 at its both sides, respectively. The shaft rotation supports 513 and 514 each insert and support upper and lower ends of first and second rotary shafts 523 and 524 such that the first and second rotary shafts 523 and 524 can axially rotate.

The support plate 510 can serve as an elevating plate such that the TV can elevate and descend in an up/down direction. The elevating plate is slidably coupled up/down to a fixing plate (not shown) fixed and installed at a wall surface.

Non-described reference numeral 511a denotes a support pin latch for stably mounting a rotation support pin 534 for stably swiveling left/right the TV mount plate 530 upon activation of the left/right swiveling part 520. Non-described reference numeral 515 denotes a shaft rotation support for supporting a rotary shaft (not shown) of an up/down tilting part (not shown).

The left/right swiveling part 520 is coupled at one side to the support plate 510, and is coupled at the other side to the TV mount plate 530 to tilt the TV by a desired angle. The left/right swiveling part 520 includes the left/right swiveling motor 521, a gear part 522, the first and second rotary shafts 523 and 524, and an interworking link 525.

Each constituent element of the left/right swiveling part 520 will be in detail described below.

The left/right swiveling motor 521 is fixed and installed at the motor support bracket 511 of the support plate 510. The left/right swiveling motor 521 has a driving shaft 521a at its one end. In particular, the left/right swiveling motor 521 enables forward/reversible rotation by a desired rotation angle, thereby forward/reversibly rotating a rod screw 522b geared with the driving shaft 521a by a desired rotation angle in a vertical direction of the driving shaft 521a.

The gear part 522 connects with the driving shaft 521a of the left/right swiveling motor 521, and is geared and ungeared using rotation of the driving shaft 521a. The gear part 522 has a connection link 522a in its front end. In detail, the gear part 522 includes the rod screw 522b and a screw housing 522c. The rod screw 522b is engaged with the driving shaft 521a, and rotates, remaining in place, in a vertical direction of the driving shaft 521a. The screw housing 522c is screwed with the rod screw 522b. The screw housing 522c spirally moves left/right depending on the rotation of the rod screw 522b, and axially rotates the connection link 522a.

In case where the driving shaft 521a and the rod screw 522b are of a gear combination type in which they generate rotary forces in vertical directions to each other, various gear combination types such as a worm gear type would be possible, for example.

The first rotary shaft 523 is of a rod shape. The first rotary shaft 523 is integrally coupled with the connection link 522a of the gear part 522, and rotatably installed at the shaft rotation support 513 provided left from the center of the support plate 510. The first rotary shaft 523 has a connector 523a connecting with the TV mount plate 530 at its upper lower end.

The connector 523a is of a "┐"-shape in which it extends toward a center of the left/right swiveling part 520 and is again bent and extends toward the TV mount plate 530.

A connection fragment 525b of the interworking link 525 is integrally coupled at its one end to a predetermined circumference of the first rotary shaft 523 as surrounding the first rotary shaft 523 in shape.

The second rotary shaft 524 is of a rod shape in which it is disposed in bilateral symmetry with the first rotary shaft 523 on the basis of a center-line crossing up/down the center of the support plate 510. In other words, the second rotary shaft 524 has a connector 524a connecting with the TV mount plate 530 at its upper end. The second rotary shaft 524 is rotatably installed at the shaft rotation support 514 provided at the other side of the support plate 510 that is opposite to the first rotary shaft 523 from the center of the support plate 510.

The interworking link 525 links the first and second rotary shafts 523 and 524 with each other such that the first and second rotary shafts 523 and 524 interwork with each other, that is, the second rotary shaft 524 rotates in the same direction by the same rotation angle as the first rotary shaft 523. In particular, the interworking link 525 includes a connection bar 525a, and the connection fragments 525b. The connection bar 525a has the same length as a distance spaced between the first and second rotations shafts 523 and 524. The connection fragments 525b each vertically extend from both ends of the connection bar 525a. The connection fragments 525b each are hinged and connected at one ends with the connection bar 525a, and are integrally coupled at the other ends with the first and second rotary shafts 523 and 524.

The TV mount plate 530 is of a plate shape in which it mounts the TV in its front, and has connector connection parts 531 and 532 connecting with the respective connector 523a and 524a of the left/right swiveling part 520 in its rear.

Non-described reference numeral 533 denotes a connector connection part connecting with a connector (not shown) of the up/down tilting part (not shown). Non-described reference numeral 534 denotes a rotation support plate stably mounted on the support pin latch 511a of the motor support bracket 511 and stably swiveling left/right the TV mount plate 530 upon activation of the left/right swiveling part 520.

The automatic wall mounting system for a wall-mounted TV according to the sixth exemplary embodiment of the present invention is completed in assembly of its constituent parts for performing a TV left/right swiveling operation, by fixing and installing the left/right swiveling motor 521 of the left/right swiveling part 520 at the motor support bracket 511 of the support plate 510, and rotatably coupling the first and second rotary shafts 523 and 524 of the left/right swiveling part 520 to the shaft rotation supports 513 and 514 provided at both sides of the support plate 510, respectively, and connecting the connectors 523a and 524a of the first and second rotary shafts 523 and 524 to the connector connection parts 531 and 532 of the TV mount plate 530, respectively.

An operation of the assembly-completed automatic wall mounting system for a wall-mounted TV when it is intended to tilt the TV in its screen position by a desired angle in any one direction of left/right, for example, when it is intended to tilt a screen toward a viewer positioned left from the TV will be described as follows. By activating the left/right swiveling motor 521 in a desired direction, the screw housing 522c moves to the right, that is, toward the left/right swiveling motor 521 through the rod screw 522b engaged with the driving shaft 521a. If so, as the screw housing 522c moves, the first rotary shaft 523 axially rotates clockwise by a predetermined rotation angle by the connection link 522a provided at the front end of the screw housing 522c. At the same time, the connector 523a provided at an upper end of the first rotary shaft 523 rotatively moves in a direction of protruding to the front, thereby pushing the TV mount plate 530 to the front. In association with this, even the second rotary shaft 524 axially rotates in the same direction as that of the first rotary shaft 523 through the interworking link 525 while the connector 524a disposed symmetric with the connector 523a rotatively moves in a direction of retreating to the rear, thereby pulling the TV mount plate 530 to the rear, and resultantly swiveling left the TV mount plate 530 while swiveling the TV screen toward the left viewer.

An operation of the automatic wall mounting system for a wall-mounted TV when it is intended to tilt the screen toward a viewer positioned right from the TV will be described as follows. By activating the left/right swiveling motor 521 in a desired direction, the screw housing 522c moves left, that is, opposite the left/right swiveling motor 521 through the rod screw 522b engaged with the driving shaft 521a. If so, as the screw housing 522c moves, the first rotary shaft 523 axially rotates counterclockwise by a predetermined rotation angle by the connection link 522a provided at the front end of the screw housing 522c. At the same time, the connector 523a provided at the upper end of the first rotary shaft 523 rotatively moves in a direction of retreating to the rear, thereby pulling the TV mount plate 530 to the rear. In association with this, even the second rotary shaft 524 axially rotates in the same direction as that of the first rotary shaft 523 through the interworking link 525 while the connector 524a disposed symmetric with the connector 523a rotatively moves in a direction of protruding to the front, thereby pushing the TV mount plate 530 to the front, and resultantly swiveling right the TV mount plate 530 while swiveling the TV screen toward the right viewer.

The left/right swiveling of the TV screen can be made only by a desired rotation angle in a desired direction by controlling an operation of the left/right swiveling motor 521 using a remote controller.

As described above, the screen control system for the wall mount TV according to the present invention has an effect of automatically swiveling left/right the screen of the TV depending on a viewer position in a remote place, thereby providing an optimal screen position to a viewer in real time while promptly, simply, and conveniently swiveling left/right the screen by automation, and simplifying a structure for left/right swiveling the TV, thereby improving work efficiency and promoting cost saving in manufacture process.

While the invention has been shown and described with reference to a certain preferred embodiment thereof, it will be understood by those skilled in the art that various changes in form and details may be made therein without departing from the spirit and scope of the invention as defined by the appended claims.

## Claims

1. An automatic wall mounting system for a wall-mounted television (TV), the system having a support plate installed at a wall surface and supporting a left/right swiveling operation of the TV; a left/right swiveling part installed at the support plate and swiveling the TV left/right; and a TV mount plate mounting the TV in its front and coupling with the left/right swiveling part in its rear,
wherein the left/right swiveling part comprises:
a left/right swiveling motor fixed and installed at the support plate, and having driving shafts at upper and lower ends, respectively;
gear parts connecting with both the driving shafts of the left/right swiveling motor, and geared and ungeared by the same length in an opposite direction using rotation of the driving shafts, and having connection links at their front ends;
a first rotary shaft integrally coupled with the connection link of the gear part, and rotatably installed at one side of the support plate, and having a pair of connectors at its predetermined portions, the connectors connecting with upper and lower ends of the TV mount plate; and
a second rotary shaft integrally coupled with the connection link of the gear part, and rotatably installed at the other side of the support plate that is opposite to the first rotary shaft, and having a pair of connectors at its predetermined portions, the connectors connecting with upper and lower ends of the TV mount plate.

2. The system of claim 1, wherein the gear parts comprise:
rod screws engaged with the driving shafts, and rotating, remaining in place, in vertical directions of the driving shafts ; and
screw housings screwed with the rod screws, and moving left/right depending on rotation of the rod screws while axially rotating the first and second rotary shafts using the connection links.

3. The system of claim 2, wherein the driving shafts and the rod screws are engaged with each other in a worm gear type.

4. The system of claim 3, further comprising gear boxes for boxing the driving shafts and the rod screws,
wherein the support plate has gear box support rods for supporting the gear boxes.

5. An automatic wall mounting system for a wall-mounted television (TV), the system having a support plate installed at a wall surface and supporting a left/right swiveling operation of the TV; a left/right swiveling part installed at the support plate and swiveling the TV left/right; and a TV mount plate mounting the TV in its front and coupling with the left/right swiveling part in its rear,
wherein the TV mount plate is hinged and coupled at its rear and upper end with a hinge connector of the support plate such that it can tilt left/right about the support plate, and at the same time, is coupled at its rear and lower end to the left/right swiveling part, and
wherein the left/right swiveling part comprises:
a left/right swiveling motor fixed and installed at the support plate, and having driving shafts at upper and lower ends, respectively;
gear parts connecting with both the driving shafts of the left/right swiveling motor, and geared and ungeared by the same length in an opposite direction using rotation of the driving shafts, and having connection links at their front ends;
a first rotary shaft integrally coupled with the connection link of the gear part, and rotatably installed at one lower side of the support plate, and having a connector at its predetermined portion, the connector connecting with a lower end of the TV mount plate; and
a second rotary shaft integrally coupled with the connection link of the gear part, and rotatably installed at the other side of the support plate that is opposite to the first rotary shaft , and having a connector at its predetermined portion, the connector connecting with a lower end of the TV mount plate.

6. The system of claim 5, wherein the gear parts comprise:
rod screws engaged with the driving shafts, and rotating, remaining in place, in vertical directions of the driving shafts ; and
screw housings screwed with the rod screws, and moving left/right depending on rotation of the rod screws while axially rotating the first and second rotary shafts using the connection links.

7. The system of claim 6, wherein the driving shafts and the rod screws are engaged with each other in a worm gear type.

8. The system of claim 7, further comprising gear boxes for boxing the driving shafts and the rod screws,
wherein the support plate has gear box support rods for supporting the gear boxes.

9. The system of claim 5, wherein a motor support bracket for covering and supporting the left/right swiveling motor is provided at a central and lower part of the support plate.

10. The system of claim 9, wherein the motor support bracket has a support pin latch at its center, and
wherein the TV mount plate has a rotary support pin at its rear and lower central part corresponding to the support pin latch such that the rotary support pin is stably mounted on the support pin latch and stably tilts left/right the TV mount plate when the left/right swiveling part is activated.

11. The system of claim 5, wherein connection parts of the TV mount plate associated with the hinge connector of the support plate and the respective connectors of the left/right tiling part are ball joints for facilitating left/right tilting.

12. The system of claim 11, wherein the TV mount plate has a hinge connection part connecting with the hinge connector of the support plate, and
wherein the hinge connection part further comprises a guide socket sliding left/right as covering the ball joints.

13. An automatic wall mounting system for a wall-mounted television (TV), the system having a support plate installed at a wall surface and supporting a left/right tilting operation of the TV; a left/right tilting part installed at the support plate and tilting the TV left/right; and a TV mount plate mounting the TV in its front and coupling with the left/right tilting part in its rear,
wherein the TV mount plate is hinged and coupled at its rear and upper end with a hinge connector of the support plate such that it can tilt left/right about the support plate, and at the same time, is coupled at its rear and lower end to the left/right tilting part, and
wherein the left/right tilting part comprises:
a pair of left/right tilting motors fixed and installed at the support plate, and having driving shafts, respectively;
gear parts connecting with the respective driving shafts of the left/right tilting motors , and geared and ungeared by the same length in an opposite direction using rotation of the driving shafts, and having connection links at their front ends;
a first rotary shaft integrally coupled with the connection link of the gear part, and rotatably installed at one lower side of the support plate, and having a connector at its predetermined portion, the connector connecting with a lower end of the TV mount plate; and
a second rotary shaft integrally coupled with the connection link of the gear part , and rotatably installed at the other side of the support plate that is opposite to the first rotary shaft , and having a connector at its predetermined portion, the connector connecting with a lower end of the TV mount plate.

14. The system of claim 13, wherein the gear parts comprise:
rod screws engaged with the respective driving shafts, and axially rotating in vertical directions of the driving shafts ; and
screw housings screwed with the rod screws, and moving left/right depending on rotation of the rod screws while axially rotating the first and second rotary shafts using the connection links.

15. The system of claim 14, wherein the driving shafts and the rod screws are engaged with each other in a worm gear type.

16. The system of claim 15, further comprising gear boxes for boxing the driving shafts and the rod screws,
wherein the support plate has gear box support rods for supporting the gear boxes.

17. The system of claim 13, wherein a motor support bracket for covering and supporting the left/right tilting motors is provided at a central and lower part of the support plate.

18. The system of claim 17, wherein the motor support bracket has a support pin latch at its center, and
wherein the TV mount plate has a rotary support pin at its rear and lower central part corresponding to the support pin latch such that the rotary support pin is stably mounted on the support pin latch and stably tilts left/right the TV mount plate when the left/right tilting part is activated.

19. The system of claim 13, wherein connection parts of the TV mount plate associated with the hinge connector of the support plate and the respective connectors of the left/right tiling part are ball joints for facilitating left/right tilting.

20. The system of claim 19, wherein the TV mount plate has a hinge connection part connecting with the hinge connector of the support plate, and
wherein the hinge connection part further comprises a guide socket sliding left/right as covering the ball joints.

21. An automatic wall mounting system for a wall-mounted television (TV), the system having a support plate installed at a wall surface and supporting a left/right tilting operation of the TV; a left/right tilting part installed at the support plate and tilting the TV left/right; and a TV mount plate mounting the TV in its front and coupling with the left/right tilting part in its rear,
wherein the left/right tilting part comprises:
left/right tilting motors and 324 each fixed and installed at both upper and lower sides of the support plate , and each having driving shafts ;
gear parts connecting with the respective driving shafts of the left/right tilting motors, and geared and ungeared by the same length using rotation of the driving shafts, respectively, and having connection links at their front ends; and
rotary shafts integrally coupled with the connection links of the gear parts, and rotatably installed at shaft rotation supports of the support plate , and having connectors at their circumferences, the connectors connecting with corresponding portions of the TV mount plate.

22. The system of claim 21, wherein the gear parts comprise:
rod screws engaged with the respective driving shafts and rotating, remaining in place, in vertical directions of the driving shafts ; and
screw housings screwed with the rod screws and moving left/right depending on rotation of the rod screws while axially rotating the rotary shafts using the connection links.

23. The system of claim 22, wherein the driving shafts and the rod screws are engaged with each other in a worm gear type.

24. The system of claim 23, further comprising gear boxes for boxing the driving shafts and the rod screws,
wherein the support plate has gear box support rods for supporting the gear boxes.

25. An automatic wall mounting system for a wall-mounted television (TV), the system having a support plate installed at a wall surface and supporting a left/right tilting operation of the TV; a left/right tilting part installed at the support plate and tilting the TV left/right; and a TV mount plate mounting the TV in its front and coupling with the left/right tilting part in its rear,
wherein the TV mount plate is hinged and fixed at its one end of a width direction, and the left/right tilting part is installed at the other end of the width direction of the TV mount plate, and
wherein the left/right tilting part comprises:
left/right tilting motors fixed and installed in parallel at the support plate, and having driving shafts protruding from their upper and lower ends, respectively;
gear parts connecting with the respective driving shafts of the left/right tilting motors, and geared and ungeared by the same length using rotation of the driving shafts, respectively, and having connection links at their front ends; and
rotary shafts integrally coupled with the connection links of the gear parts , and rotatably installed at one-side upper and lower ends of the support plate, and having connectors at predetermined portions, the connectors connecting with upper and lower ends of the TV mount plate.

26. The system of claim 25, wherein the gear parts comprise:
rod screws engaged with the respective driving shafts, and rotating, remaining in place, in vertical directions of the driving shafts; and
screw housings screwed with the rod screws, and moving left/right depending on rotation of the rod screws while axially rotating the respective rotary shafts using the connection links.

27. The system of claim 26, wherein the driving shafts and the rod screws are engaged with each other in a worm gear type.

28. The system of claim 27, further comprising gear boxes for boxing the driving shafts and the rod screws,
wherein the support plate has gear box support rods for supporting the gear boxes.

29. An automatic wall mounting system for a wall-mounted television (TV), the system having a support plate installed at a wall surface and supporting a left/right tilting operation of the TV; a left/right tilting part installed at the support plate and tilting the TV left/right; and a TV mount plate mounting the TV in its front and coupling with the left/right tilting part in its rear,
wherein the left/right tilting part comprises:
a left/right tilting motor fixed and installed at the support plate, and having a driving shaft at one end;
a gear part connecting with the driving shaft of the left/right tilting motor, and geared and ungeared using rotation of the driving shaft, and having a connection link at its front end;
a first rotary shaft integrally coupled with the connection link of the gear part, and rotatably installed at one side of the support plate, and having a connector at its one end, the connector connecting with the TV mount plate;
a second rotary shaft having a shape in which it is symmetric with the first rotation shaft, and rotatably installed at the other side of the support plate that is opposite to the first rotary shaft; and
an interworking link connecting and interworking the first and second rotary shafts with each other.

30. The system of claim 29, wherein the gear part comprise:
a rod screw engaged with the driving shaft , and rotating, remaining in place, in a vertical direction of the driving shaft; and
a screw housing screwed with the rod screw , and moving left/right depending on rotation of the rod screw and rotating the connection link.

31. The system of claim 30, wherein the driving shaft and the rod screw are engaged with each other in a worm gear type.

32. The system of claim 29, wherein the interworking link comprises:
a connection bar having the same length as a distance spaced between the first and second rotations shafts; and
connection fragments each vertically extending from both ends of the connection bar and hinged and connected at their one-ends with the connection bar, and each integrally coupled at the other ends with the first and second rotary shafts.
